(19) Europäisches Patentamt
European Patent Office
Office européen des brevets

(11) EP 3 972 283 B1

(12) **EUROPEAN PATENT SPECIFICATION**

(45) Date of publication and mention of the grant of the patent:
**18.03.2026 Bulletin 2026/12**

(21) Application number: **20843412.6**

(22) Date of filing: **24.07.2020**

(51) International Patent Classification (IPC):
***H04R 1/28*** *(2006.01)* ***H04R 1/42*** *(2006.01)*
***H04R 9/18*** *(2006.01)* *G06F 30/23 (2020.01)*
*G06F 111/10 (2020.01)*

(52) Cooperative Patent Classification (CPC):
**H04R 1/2826;** G06F 30/23; G06F 2111/10

(86) International application number:
**PCT/KR2020/009812**

(87) International publication number:
**WO 2021/015593 (28.01.2021 Gazette 2021/04)**

(54) **LOUDSPEAKER COMPRISING PORT TUBE**

LAUTSPRECHER MIT ANSCHLUSSROHR

HAUT-PARLEUR COMPRENANT UN TUBE À ORIFICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2019 US 201962878683 P**
**10.07.2020 US 202016926364**

(43) Date of publication of application:
**23.03.2022 Bulletin 2022/12**

(73) Proprietor: **Samsung Electronics Co., Ltd.**
**Suwon-si, Gyeonggi-do 16677 (KR)**

(72) Inventors:
- **BEZZOLA, Andri**
  **Mountain View, California 94043 (US)**
- **DEVANTIER, Allan Otto**
  **Mountain View, California 94043 (US)**

(74) Representative: **Walaski, Jan Filip et al**
**Venner Shipley LLP**
**200 Aldersgate**
**London EC1A 4HD (GB)**

(56) References cited:
**JP-A- 2007 025 380** **JP-A- 2007 166 589**
**KR-A- 20110 028 800** **KR-B1- 100 845 956**
**US-A1- 2006 052 992** **US-A1- 2013 083 937**

- **SALVATTI A ET AL: "MAXIMIZING PERFORMANCE FROM LOUDSPEAKER PORTS", JOURNAL OF THE AUDIO ENGINEERING SOCIETY, AUDIO ENGINEERING SOCIETY, NEW YORK, NY, US, vol. 50, no. 1/02, 1 January 2002 (2002-01-01), pages 19 - 45, XP001115934, ISSN: 1549-4950**
- **"Particle Image Velocimetry", vol. 112, 1 February 2008, SPRINGER BERLIN HEIDELBERG, Berlin, Heidelberg, ISBN: 978-3-540-73528-1, article ROSSI MASSIMILIANO ET AL: "PIV Application to Fluid Dynamics of Bass Reflex Ports", pages: 259 - 270, XP055931631, DOI: 10.1007/ 978-3-540-73528-1_13**
- **RAPOPORT Z ET AL: "Analysis and Modeling of the Bi-Directional Fluid Flow in Loudspreaker Ports", PREPRINTS OF PAPERS PRESENTED AT THE AES CONVENTION, XX, XX, 1 October 2004 (2004-10-01), pages 1 - 17, XP008084471**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 972 283 B1

## Description

TECHNICAL FIELD

The present invention generally relates to a loudspeaker including a port tube, and more particularly, to a method of designing a loudspeaker including a port tube having design parameters optimized to improve the sound quality of the loudspeaker.

BACKGROUND ART

A loudspeaker is a device that reproduces sound by being connected to a receiver, a television, a radio device, a music reproducing device, an electronic sound generating device (e.g., a smartphone), or a video player.

The loudspeaker may include a port tube used to improve the low frequency output of the loudspeaker. Due to the improvement of the low frequency output by the port tube, the bass of the loudspeaker may be enhanced. The port tube creates a mass of air in the port tube. Also, the loudspeaker may include an enclosure that acts as a suspension supporting the mass of air created in the port tube.

The air in the port tube and the air in the enclosure create a mass-spring (damper) system that has a certain resonance. When this resonance is not properly adjusted, the resonating air of the port tube may create a poor low frequency output for the loudspeaker. Therefore, in order to improve the low frequency output of the loudspeaker, there is a need to design the shape of an optimal port tube that may properly adjust the resonance of the air in the port tube.

Fluid dynamic investigations of loudspeaker ports are disclosed in US2006/052992A1; Salvatti et al., "Maximizing Performance from Loudspeaker Ports", Journal of the Audio Engineering Society, vol. 50, no. 1/02, 2002; Rossi et al., "PIV Application to Fluid Dynamics of Bass Reflex Ports", Particle Image Velocimetry, vol. 112, p. 259-270, 2008; and Rapoport and Devantier, "Analysis and Modeling of the BiDirectional Fluid Flow in Loudspeaker Ports", Preprints of Papers Presented at the AES Convention, Convention Paper 6194, p. 1-17, 2004.

DESCRIPTION OF EMBODIMENTS

TECHNICAL PROBLEM

According to various embodiments, there is provided a loudspeaker including a port tube having design parameters optimized to improve the low frequency output of the loudspeaker.

SOLUTION TO PROBLEM

In accordance with the present invention, as set out in claim 1, there is provided a method of designing a port tube for a loudspeaker including the port tube having at least one flared exit designed by the design method with respect to port tube design parameters. Embodiments of the invention are set out in the dependent claims. Other examples are set out in the following disclosure.

The port tube design parameters may define a shape of the port tube.

The port tube design parameters may include one or more of a length, a minimal cross-sectional area, a flare rate, a maximal cross-sectional area, or parameterization of the port tube.

The updated port tube design parameters corresponding to the minimized measure of shear may determine an optimal flare design shape for the port tube.

The loudspeaker may further include enclosure on which the port tube is mounted.

The port tube may be mounted on one surface of the enclosure.

The loudspeaker may further include at least one driver mounted on one surface of the enclosure and configured to reproduce sound.

The at least one driver and the port tube may be arranged side by side on the same surface of the enclosure.

The at least one driver and the port tube may be arranged side by side in a vertical direction.

The port tube may be provided under the at least one driver.

Air resonating in the enclosure may be discharged to the outside by the at least one driver through the port tube.

ADVANTAGEOUS EFFECTS OF DISCLOSURE

A loudspeaker including a port tube having design parameters optimized to improve the low frequency of the loudspeaker is provided.

Port tube design parameters may be determined based on determining a measure of shear at exits of a port tube through a numerical simulation process, and accordingly, a loudspeaker including a port tube having design parameters optimized to improve the low frequency output of the loudspeaker is designed.

BRIEF DESCRIPTION OF DRAWINGS

FIG. 1 schematically illustrates an example configuration of a loudspeaker including a port tube and an enclosure.

FIG. 2 schematically illustrates an example configuration of a straight port tube.

FIG. 3 schematically illustrates an example configuration of a port tube with flared exits.

FIG. 4 illustrates an image of gradients in air velocity across exits of a port tube.

FIG. 5 illustrates a graph of an air velocity difference from the center of a port tube to edges of the port tube.

FIG. 6 schematically illustrates an example view of simulated air flow separation.

FIG. 7 illustrates a three-dimensional (3D) first graph of sound spectra for an example loudspeaker including a non-optimal port design at various different levels.

FIG. 8 illustrates a 3D second graph of sound spectra of an example loudspeaker including a port tube that is optimal at various different levels.

FIG. 9 illustrates a graph comparing port tubes having various different shapes for noise versus input level.

FIG. 10 illustrates a schematic block diagram for a method of designing a port tube for a loudspeaker, according to the invention.

FIG. 11 illustrates an image of gradients in air velocity across a port tube.

FIG. 12 illustrates a graph of a difference between local air velocity at the center of the port tube and at walls of the port tube for the image of FIG. 11.

FIG. 13 illustrates an image of gradients in air velocity across a port tube that is under-flared.

FIG. 14 illustrates a graph of a difference between local air velocity at the center of the port tube and at walls of the port tube for the image of FIG. 13.

FIG. 15 illustrates an image of gradients in air velocity across a port tube that is optimal.

FIG. 16 illustrates a graph of a difference between local air velocity at the center of the port tube and at walls of the port tube for the image of FIG. 15.

FIG. 17 illustrates an image of gradients in air velocity across a port tube that is over-flared.

FIG. 18 illustrates a graph of a difference between local air velocity at the center of the port tube and at walls of the port tube for the image of FIG. 17.

FIG. 19 illustrates an image of gradients in air velocity across a port tube that is under-flared showing flatness of an air velocity contour line at an exit of the port tube.

FIG. 20 illustrates an image of gradients in air velocity showing flatness of an air velocity contour line at an exit of a port tube that is optimal.

FIG. 21 illustrates an image of gradients in air velocity showing flatness of an air velocity contour line at an exit of a port tube that is over-flared.

FIG. 22 illustrates a graph of normalized velocity vectors and port tube chord vectors distributed across a port tube that is under-flared.

FIG. 23 illustrates a graph of normalized velocity vectors and port tube chord vectors distributed across a port tube that is optimal.

FIG. 24 illustrates a graph of normalized velocity vectors and port tube chord vectors distributed across a port tube that is over-flared.

FIG. 25 illustrates a schematic block diagram of an example configuration of a computer system useful for implementing various disclosed embodiments.

## MODE OF DISCLOSURE

Hereinafter, a loudspeaker including a port tube according to various embodiments will be described in detail with reference to the accompanying drawings. In the drawings, the same reference numerals refer to the same components, and sizes and thicknesses of the components may be exaggerated for clarity of description.

In the following, it will be understood that embodiments that do not fall within the scope of the claims relate to exemplary embodiments of the disclosure that are not covered by the claimed invention.

It will be understood that the terms such as "first", "second", etc. may be used herein to describe various components, but these components should not be limited by these terms. It will be also understood that the terms are only used to distinguish one component from another. The loudspeaker including a port tube may be implemented in many different forms, and not limited thereto as will be discussed herein.

Throughout the specification, when a certain part "includes" or "comprises" a certain component, unless there is a particular description contrary thereto, the part may further include or comprise other components, not excluding the other components.

FIG. 1 schematically illustrates an example configuration of a loudspeaker 100 including a port tube 120 and an enclosure 130. FIG. 2 schematically illustrates an example configuration of a straight port tube 210. FIG. 3 schematically illustrates an example configuration of a port tube 220 with flared exits. FIG. 4 illustrates an image of gradients in air velocity across exits of a port tube. FIG. 5 illustrates a graph of an air velocity difference from the center of a port tube to edges of the port tube. FIG. 6 schematically illustrates an example view 500 of simulated air flow separation.

Referring to FIG. 1, the loudspeaker 100 may include a driver 110 that reproduces sound by causing resonance in the air, and an enclosure 130 on which the driver 110 is mounted. A certain space in which air may resonate may be formed by the enclosure 130. The enclosure 130 may include a port tube 120 through which the air resonating in the certain space may be discharged to the outside. The driver 110 and the port tube 120 may be arranged side by side in a vertical direction on the same surface of the enclosure 130. For example, the port tube 120 may be provided under the driver 110.

When the loudspeaker 100 receives an audio signal from the outside, the driver 110 moves, which causes air in the enclosure 130 to move through an exit of the port tube 120. The port tube 120 may be used in the loudspeaker 100 to improve the low frequency output of the driver 110. Accordingly, the port tube 120 may enhance the bass sound of the driver 110. The port tube 120 creates a mass of air internally. The enclosure 130 may act as a suspension for the mass of air created by the port tube 120. The air in the port tube 120 and the air in the enclosure 130 may create a mass-spring-damper system which may have a certain resonance. When the resonance is properly adjusted, the resonating air in the loudspeaker 100 including the port tube 120 may create an improved low frequency output for the loudspeaker 100, compared to a sealed box type of loudspeaker.

Referring to FIGS. 2 and 3, port tubes 210 and 220 includes a body including at least one flared exit. For example, referring to FIG. 2, the port tube 210 may have a hollow cylindrical shape. Also, referring to FIG. 3, the port tube 220 may have a structure in which flared exits are provided at both ends each having a hollow cylindrical shape. In this case, a flare rate of the exits of the port tube 220 may be properly adjusted.

At a higher sound pressure level, the air moves at a higher velocity through the port tube 120 of the loudspeaker 100, which may introduce unwanted effects such as turbulence and flow separation. These unwanted effects may lead to a degradation of the sound quality. Therefore, in order to reproduce sound with an improved quality, the port tube 120 may be designed with a more "aerodynamic" profile (e.g., a narrow at the center and flaring towards ends) to avoid or delay the onset of turbulence and flow separation.

A flare rate for the port tube 120 that is optimal has not been clearly defined. Therefore, a designer of the loudspeaker 100 often needs to create several prototypes of the port tube 120 to determine an optimal flare rate of the port tube 120 and an optimal shape of the port tube 120.

Referring to FIG. 4, an image 300 shows sharp gradients in air velocity across exits of an example port tube 120. For example, flow separation may occur when the curvature of flow exceeds a certain limit. Referring to FIG. 5, a graph 400 may show a difference between air velocity at edges (walls) of the port tube 120 represented by a first curve 410 and air velocity at the center of the port tube 120 represented by a second curve 420.

Referring to FIG. 6, air flow may be created in various directions 520 and 530 in a port tube 510. Air flow reversal may primarily be caused by an adverse pressure gradient imposed on a boundary layer. The streamwise momentum equation inside the boundary layer may be stated as follows.

$$u\,\frac{\partial u}{\partial s} = -\frac{1}{p}\frac{dp}{ds} + \nu\,\frac{\partial^2 u}{\partial y^2}$$

In the momentum equation stated above, s indicates streamwise coordinates, and y indicates normal coordinates. An adverse pressure gradient may appear when shear stress is greater than 0, that is, $\frac{\partial p}{\partial s} > 0$. As described above, when the shear stress is greater than 0, if the adverse pressure gradient is strong enough, the velocity u may decrease along s and possibly go to zero. The various directions 520 and 530 of air flow may follow vectors before the flare of the port tube 510 and deviate entering and exiting the flare of the port tube 510. When flow separation occurs, the air in the port tube 510 may be excited with an impulse-like pressure perturbation as vortices are shed. This perturbation excites the natural resonances in the port tube 510 itself. The natural resonances in the port tube 510 itself may be eigenmodes of air in the port tube 510. Even if the natural frequencies are not included in a source material (e.g., music, etc.), the natural frequencies may become clearly audible, and may be measured with a standard audio measurement equipment.

FIG. 7 illustrates a three-dimensional (3D) first graph 600 of sound spectra for an example loudspeaker including a port tube that is non-optimal at various different levels. FIG. 8 illustrates a 3D second graph 610 of sound spectra of an example loudspeaker including a port tube that is optimal at various different levels.

In both the first graph 600 and the second graph 610, the example loudspeaker is excited with a signal including frequencies from about 20 Hz to about 160 Hz. As shown in FIG. 7, the output may become clearly evident in an area 605 around 750 Hz. As shown in FIG. 8, with a port tube that is optimal, an artifact in an area 615 around 750 Hz may only become evident at a high driving voltage of 30 V or more.

FIG. 9 illustrates a graph comparing port tubes having various different shapes for noise versus input level.

Referring to FIG. 9, a graph 700 shows a power spectral content of a band between about 700 Hz and about 1200 Hz compared to the total power spectrum. An x-axis of the graph 700 is a drive level. In the graph 700, compared port tubes are as follows. A first curve 710 represents a port tube that is straight with no blend, a second curve 720 represents a port tube that is straight with blends, a third curve 730 represents a port tube that is under-flared, a fourth curve 740 represents a port tube that is over-flared, and a fifth curve 750 represents a port tube that is optimal.

FIG. 9 clearly shows that there is an optimal flare rate. Compared to a straight port tube (e.g., straight or straight with small blends at ends), a flared port tube may perform much batter. For example, a port tube that is optimal based on avoiding pressure inversion along the boundary of the port tube and transition to baffle may be designed. For example, a port tube that is optimal may be designed so that shear stress rate " $\frac{\partial p}{\partial s}$ " is minimized.

Moreover, predictions of pressure and pressure gradients may be made efficiently with linear numerical simulations. A port tube with minimal shear stress at a low level where linear simulations are valid may operate at a higher level before flow separation occurs. Designing the shape of a port tube may be performed through an optimization process where a measure of shear stress is minimized by varying some port tube shape parameters. Hereinafter, with reference to FIGS. 10 to 24, a method of designing the shape of a port tube that is optimal will be described in detail.

FIG. 10 illustrates a schematic flowchart for a method of designing a port tube applicable to a loudspeaker, according to the invention.

Referring to FIG. 10, the method of designing a port tube includes receiving, by a processor, port tube design parameters (first operation S101), predicting, by the processor, pressure and pressure gradients by performing a numerical simulation process based on the port tube design parameters received in the first operation S101 (second operation S102), and determining, by the processor, a measure of shear within the port tube and at exits of the port tube based on the pressure and pressure gradients predicted in the second operation S102 (third operation S103). Furthermore, the method of designing a port tube further includes updating, by the processor, the port tube design parameters (fourth operation S104), and sequentially repeating performing the numerical simulation process in the second operation S102 and determining of the measure of shear in the third operation S103, until the measure of shear is minimized.

The method of designing a port tube according to an embodiment uses numerical simulation to predict more accurately an optimal port tube shape that maximally delays the onset of turbulence and flow separation.

In the first operation S101, port tube design parameters p for a loudspeaker are received. The loudspeaker may be, for example, a dedicated loudspeaker for any one of a television, a sound bar, and a subwoofer, but is not limited thereto. The port tube design parameters p may be parameters p that define the shape of the port tube. The port tube design parameters p may include a port length, a minimal cross-sectional area, a flare rate, a maximal cross-sectional area, parametrization (e.g., spline, parabolic, elliptical, exponential, polynomial, Bezier-curves, piece-wise parabolic, piece-wise quadratic, piece-wise polynomial), etc.

In the second operation S102, the pressure and pressure gradients are predicted by performing the numerical simulation process based on the port tube design parameters p received in the first operation S101. For example, the numerical simulation process may include a finite element simulation process. When the numerical simulation is a finite element simulation, in the second operation S102, partial differential equations in two or three space variables may be solved. The finite element simulation subdivides a large system into smaller and simpler parts that are referred to as finite elements. A particular space discretization in the space dimensions may be implemented by a construction of a mesh of the port tube. A meshed port tube may be included in a numerical domain having a finite number of points. The finite element simulation of a boundary value problem includes a process of generating a system of algebraic equations and approximating the unknown function over the numerical domain. For example, the finite element simulation may be run to numerically solve the Helmholtz equation for acoustic waves, which may be performed in two-dimension (2D), 2D axisymmetric, or 3D, depending on a problem. The Helmholtz equation is referred to as an eigenvalue problem for the Laplace operator and is associated with the linear partial differential equation. In this case, the Laplace operator (Laplacian) represents an amplitude.

In the third operation S103, measures of shear rate within the port tube and at exits of the port tube are determined. In a post-processing operation after the numerical simulation process in the second operation S102, a measure of shear may be determined based on the result of the numerical simulation. When the measure of shear is minimized as determined in the third operation S103, an optimal solution is determined and the process ends.

When the measure of shear is not minimized as determined in the third operation S103, the port tube parameters p may be updated, and the second operation S102 and the third operation S103 may be sequentially repeated in the fourth operation S104. As described above, the fourth operation S104, the second operation S102, and the third operation S103 may be sequentially repeated until the measure of shear is minimized. The port tube parameters p may be iteratively updated in order to determine the optimal solution. Also, a suitable optimization algorithm may be used to efficiently update the port tube parameters p to obtain the optimal solution faster.

FIG. 11 illustrates an image 900 of gradients in air velocity across a port tube. FIG. 12 illustrates a graph of a difference between local air velocity at the center of the port tube and at walls of the port tube for the image 900 of FIG. 11.

An embodiment according to the invention specifies the measure of shear as a difference $\delta$ between an air velocity $v_{center}$ at the center of the port tube and an air velocity $v_{wall}$ near the walls of the port tube. In order to minimize the measure of shear, the graphs (e.g., the graph of FIG. 12 including a first curve 1020 and a second curve 1010) of the air velocities at two locations (at the center and near the walls of the port tube) are to be as parallel as possible. By minimizing variance $\Lambda$, the measure of shear in the port tube is defined as follows.

min :

$$\Lambda = \int_0^{L_{port}} \left(\delta - \bar{\delta}\right)^2 ds$$

In the equation above, "$\delta$" denotes a difference between the air velocity $v_{center}$ at the center of the port tube and the air velocity $v_{wall}$ near the walls of the port tube. A port tube with lowest shear stress stays unseparated for highest port tube output level. The graph of FIG.

12 shows a difference between the first curve 1020 representing local air velocity at the center of the port tube and the second curve 1010 representing local air velocity at walls of the port tube for the image 900 of FIG. 11. For example, a measure of shear may be determined based on determining a difference between at least two points between a graph (the first curve 1020) representing the air velocity at the center of the port tube and a graph (the second curve 1010) representing the air velocity near the walls of the port tube.

FIG. 13 illustrates an image 1100 of gradients in air velocity across a port tube that is under-flared. FIG. 14 illustrates a graph of a difference between local air velocity at the center of the port tube and at walls of the port tube for the image 1100 of FIG. 13.

The graph of FIG. 14 shows a difference between a first curve 1220 representing local air velocity at the center of a port tube that is under-flared and a second curve 1210 representing local air velocity at walls of the port tube for the image 1100 of FIG. 13. As shown in FIG. 14, the first and second curves 1220 and 1210 diverge from being parallel at the lower end and upper ends of a z-coordinate. Also, the first and second curves 1220 and 1210 separate before intersecting each other.

FIG. 15 illustrates an image 1300 of gradients in air velocity across a port tube that is optimal. FIG. 16 illustrates a graph of a difference between local air velocity at the center of the port tube and at walls of the port tube for the image 1300 of FIG. 15.

The graph of FIG. 16 shows a difference between a first curve 1420 representing local air velocity at the center of a port tube that is optimal and a second curve 1410 representing local air velocity at walls of the port tube for the image 1300 of FIG. 15. As shown in FIG. 16, the first and second curves 1420 and 1420 remain being parallel between two points that the first and second curves 1420 and 1410 intersect.

FIG. 17 illustrates an image 1500 of gradients in air velocity across a port tube that is over-flared. FIG. 18 illustrates a graph of a difference between local air velocity at the center of the port tube and at walls of the port tube for the image 1500 of FIG. 17.

The graph of FIG. 18 shows a difference between a first curve 1620 representing local air velocity at the center of a port tube that is over-flared and a second curve 1610 representing local air velocity at walls of the port tube for the image 1500 of FIG. 17. As shown in FIG. 18, the first and second curves 1620 and 1610 remain being parallel between points that the first and second curves 1620 and 1610 intersect.

FIG. 19 illustrates an image 1700 of gradients in air velocity across a port tube that is under-flared showing flatness of an air velocity contour line 1710 at an exit of the port tube.

A measure of shear in the port tube may be determined as "flatness" of the air velocity contour line at the exit of the port tube. A port tube with a "flatter" air velocity contour line at the exit of the port tube may have less shear and less propensity for exhibiting flow separation due to shear stress. The contour line 1710 of FIG. 19 may be concave (or curve inward) showing the port tube being under-flared. For example, by using the method of designing a port tube for a loudspeaker in FIG. 10, the port tube design parameters p may be adjusted to flatten out the air velocity contour line at the exit of the port tube to optimize the design of the port tube.

FIG. 20 illustrates an image 1720 of gradients in air velocity showing flatness of an air velocity contour line 1725 at an exit of a port tube that is optimal.

The contour line 1725 of FIG. 20 is nearly flat showing the result of the port tube that is optimal.

FIG. 21 illustrates an image 1730 of gradients in air velocity showing flatness of an air velocity contour line 1735 at an exit of a port tube that is over-flared.

The contour line 1735 of FIG. 21 is convex (or curves outward) showing the result of the port tube that is over-flared.

FIG. 22 illustrates a graph 1800 of normalized velocity vectors and port tube chord vectors distributed across a port tube 1815 that is under-flared.

A measure of shear in the port tube may be specified based on "how parallel port chord vectors and velocity vectors of the port tube are to one another". The port tube may be split proportionately along a radial coordinate and divided into several chords. The port tube may have minimal shear and propensity for flow separation when the velocity vectors in the port tube are as parallel as possible to the chord vectors of the port tube.

In the graph 1800 of FIG. 22, the normalized velocity vectors and port tube chord vectors distributed across the port tube 1815 within an oval 1805 may not be aligned in parallel to one another. Rather, the normalized velocity vectors may be angled more to the left as compared to the port tube chord vectors distributed across the port tube 1815 within the oval 1805. This means that the port tube 1815 is designed to be under-flared with respect to the port tube design parameters p.

FIG. 23 illustrates a graph 1820 of normalized velocity vectors and port tube chord vectors distributed across a port tube 1825 that is optimal.

In the graph 1820 of FIG. 23, the normalized velocity vectors and port tube chord vectors distributed across the port tube 1825 may be aligned in parallel to one another. This means that the port tube 1825 is designed to be optimal with respect to the port tube design parameters p.

FIG. 24 illustrates a graph 1830 of normalized velocity vectors and port tube chord vectors distributed across a port tube 1840 that is over-flared.

In the graph 1830 of FIG. 24, the normalized velocity vectors and port tube chord vectors distributed across the port tube 1840 within an oval 1835 may not be aligned in parallel to one another. Rather, the normalized velocity vectors may be angled more to the right as compared to the port tube chord vectors distributed across the port tube 1840 within the oval 1835. This means that the port tube 1840 is designed to be over-flared with respect to the port tube design parameters p.

FIG. 25 illustrates a schematic block diagram of an example configuration of a computer system 2000 useful for implementing various disclosed embodiments.

Referring to FIG. 25, the computer system 2000 may include one or more processors 2001, a display device 202, a main memory 2003, a storage device 2004, a removable storage device 2005, a user interface device 2006, and a communication interface 2007.

The display device 202 may display videos, graphics, sentences, or other data. The main memory 2003 may include, for example, a random access memory. The storage device 2004 may include a hard disk drive. The removable storage device 2005 may include at least one of a removable storage device, a removable memory module, a magnetic tape drive, an optical disk drive, and a computer-readable medium having stored therein computer software and/or data. The user interface device 2006 may include at least one of a keyboard, a touch screen, a key pad, and/or a pointing device. The communication interface 2007 may include at least one of a modem, a network interface (such as an Ethernet card), a communication port, or a PCMCIA slot and/or card.

The communication interface 2007 allows software and data to be transferred between the computer system 2000 and external devices. The computer system 2000 may further include a communication infrastructure 2008 (e.g., a communication bus, a cross-over bar, or a network) to which the aforementioned devices/modules 2001 through 2007 are connected. Information transferred via the communication interface 2007 may be in the form of signals such as electronic, electromagnetic, optical, or other signals capable of being received by the communication interface 2007, via a communication link. The communication link may be implemented by using a wire or a cable, fiber optics, a cellular phone line, a radio frequency (RF) link, and/or other communication channels.

Computer program instructions representing the block diagram and/or flowchart herein may be loaded onto a computer or a programmable data processing apparatus to cause a series of operations that may be implemented on a computer. In an embodiment, processing instructions for the method of designing a port tube in FIG. 10 may be stored as program instructions on the main memory 2003, the storage device 2004, and/or the removable storage device 2005 for execution by the processor(s) 2001. For example, the program performing the method of designing a port tube for a loudspeaker to optimize port tube design parameters for a loudspeaker in FIG. 10 may be stored as program instructions in a non-transitory processor-readable medium. Embodiments have been described with reference to the flowchart and/or block diagram of methods, apparatuses (systems), and computer program products. In some cases, each block of such a flowchart and/or block diagram, or combinations thereof may be implemented by computer program instructions.

The computer program instructions executed by the processor(s) 2001 create means for implementing the functions/operations specified in the flowchart and/or block diagram herein. Each block in the flowchart/block diagram may represent a hardware and/or software module of a logic. The terms "computer program medium", "computer (processor) usable medium", "computer (processor) readable medium", and "computer program product" may be used to generally refer to media such as a main memory, a secondary memory, a removable storage device, a hard disk installed in a hard disk drive, and signals. These computer program products are means for providing software to the computer system.

The computer system may read data, instructions, messages or message packets, and other computer-readable information from the computer (processor) readable medium. The computer (processor) readable medium, for example, may include a non-volatile memory, such as a floppy disk, a read-only memory (ROM), a flash memory, a disk drive memory, a compact disc read-only memory (CD-ROM), and other permanent storage devices. The computer (processor) readable medium is useful, for example, for transferring information, such as data and computer instructions, between computer systems.

Computer program instructions may be stored in a computer readable medium that may direct a computer, other programmable data processing apparatuses, or other devices to function in a particular manner, such that the instructions stored in the computer (processor) readable medium produce an article of manufacture including instructions.

For example, the embodiments of the specification may be embodied as a system, a method, or a computer program product. Accordingly, the embodiments may take the form of an entirely hardware embodiment, an entirely software embodiment (including firmware, resident software, micro-code, etc.) or an embodiment combining software and hardware that may all generally be referred to as a "circuit", "module", or "system".

Also, some embodiments may take the form of a computer program product embodied in one or more computer (processor) readable medium(s) having computer (processor) readable program code embodied thereon. Furthermore, any combination of one or more computer (processor) readable medium(s) may be used. The computer (processor) readable medium may include a computer readable storage medium (e.g., a non-transitory computer (processor) readable storage medium). A computer readable storage medium may be, for example, but not limited to, an electronic, magnetic, optical, electromagnetic, infrared, or semiconductor system or apparatus, or any suitable combination of the foregoing. More examples of the computer readable storage medium may include an electrical connection having one or more wires, a portable computer diskette, a hard disk, a random access memory (RAM), a ROM, an erasable programmable read-only memory (EPROM or flash memory), an optical fiber, a portable CD-ROM, an optical storage device, a magnetic storage device, or any suitable combination of the foregoing.

The computer readable storage medium may be any tangible medium that may include or store a program for use by or in connection with an instruction execution system or apparatus. Computer program code for carrying out operations for some embodiments may be written in any combination of one or more programming languages, including an object oriented programming language such as Java, Smalltalk, C++, or the like, and conventional procedural programming languages, such as the "C" programming language or similar programming languages.

The program code may be executed entirely on a user's computer, partly on the user's computer, as a stand-alone software package, partly on the user's computer and partly on a remote computer or entirely on the remote computer or server. When the program code is executed on the remote computer, the remote computer may be connected to the user's computer through any type of network, including a local area network (LAN) or a wide area network (WAN). Furthermore, the remote computer may be connected to an external computer, for example, through the Internet using an Internet service provider.

These computer program instructions may be provided to a special purpose computer, or other programmable data processing apparatus to produce a machine. Accordingly, the instructions which are executed via a processor of the computer or other programmable data processing apparatus, create means for implementing the functions/operations specified in the flowchart and/or block diagram of the specification. The computer program instructions may also be loaded onto a computer, other programmable data processing apparatuses, or other devices to cause a series of operational steps to be performed on the computer, other programmable apparatuses, or other devices to produce a computer implemented process. The instructions, which are executed on the computer or other programmable apparatuses, provide processes for implementing the functions/operations specified in the flowchart and/or block diagram block(s).

The flowchart and/or block diagram in the specification illustrate the architecture, functionality, and operation of possible implementations of systems, methods, and computer program products according to various embodiments. In this regard, each block in the flowchart and/or block diagram of the specification may represent a module, a segment, or a portion of instructions, which includes one or more executable instructions for implementing the specified logical function(s).

The functions noted in each block of the flowchart and/or block diagram of the specification may occur out of the order illustrated in the figures. For example, two blocks shown in succession may be executed substantially concurrently, or the blocks may sometimes be executed in the reverse order, depending upon the functionality involved. It will also be noted that each block of the flowchart and/or block diagram, and combinations of blocks of the flowchart and/or block diagram in the specification, may be implemented by special purpose hardware-based systems that perform the specified functions or operations or carry out combinations of special purpose hardware and computer instructions.

The aforementioned loudspeaker including a port tube has been described with reference to the embodiments illustrated in the figures to help understanding. It will be understood by those of ordinary skill in the art that various modifications can be derived therefrom. The method for designing a port tube for a loudspeaker including the port tube, according to the present invention. is defined by the appended claims.

## Claims

1. A method of designing a port tube (120, 210, 220) for a loudspeaker (100) including the port tube having at least one flared exit designed by the design method with respect to port tube design parameters, p, the method comprising:

   receiving (S101), by a processor (2001), the port tube design parameters;
   predicting (S102), by the processor, pressure and pressure gradients by performing a numerical simulation process based on the port tube design parameters;
   determining (S103), by the processor, a measure of shear within the port tube and at exits of the port tube based on the predicted pressure and pressure gradients; and
   until the measure of shear is minimized, updating (S104), by the processor, the port tube design parameters, and sequentially repeating performing the numerical simulation process and the determining of the measure of shear,
   wherein the measure of shear is based on determining a difference between at least two points between a graph of air velocity at a centre of the port tube and a graph of air velocity near walls of the port tube, and
   wherein by minimizing variance, $\Lambda$, the measure of shear is defined as: min :

$$\Lambda = \int_0^{L_{port}} \left(\delta - \bar{\delta}\right)^2 ds ,$$

   where $\delta$ denotes a difference between the air velocity at the centre of the port tube and the air velocity near the walls of the port tube.

2. The method of claim 1, wherein the port tube design parameters define a shape of the port tube (120, 210, 220).

3. The method of claim 2, wherein the port tube design parameters comprise one or more of a length, a minimal cross-sectional area, a flare rate, a maximal cross-sectional area, or parameterization of the port tube (120, 210, 220).

4. The method of claim 1, wherein the updated port tube design parameters corresponding to the minimized measure of shear determine an optimal flare design shape for the port tube (120, 210, 220).

5. The method of claim 1, wherein the loudspeaker further comprises an enclosure (130) on which the port tube (120, 210, 220) is mounted.

6. The method of claim 5, wherein the port tube (120, 210, 220) is mounted on one surface of the enclosure (130).

7. The method of claim 5, wherein the loudspeaker (100) further comprises at least one driver (110) mounted on one surface of the enclosure (130) and configured to reproduce sound.

8. The method of claim 7, wherein the at least one driver (110) and the port tube (120, 210, 220) are arranged side by side on the same surface of the enclosure (130).

9. The method of claim 8, wherein the at least one driver (110) and the port tube (120, 210, 220) are arranged side by side in a vertical direction.

10. The method of claim 9, wherein the port tube (120, 210, 220) is provided under the at least one driver (110).

11. The method of claim 7, wherein air resonating in the enclosure (130) is discharged to the outside by the at least one driver (110) through the port tube (120, 210, 220).

## Patentansprüche

1. Verfahren zum Konstruieren eines Anschlussrohrs (120, 210, 220) für einen Lautsprecher (100), beinhaltend das Anschlussrohr mit mindestens einem aufgeweiteten Austritt, konstruiert durch das Konstruktionsverfahren in Bezug auf Anschlussrohr-Konstruktionsparameter, p, wobei das Verfahren Folgendes umfasst:

   Empfangen (S101), durch einen Prozessor (2001), der Anschlussrohr-Konstruktionsparameter;

   Vorhersagen (S102), durch den Prozessor, von Druck und Druckgradienten durch Durchführen eines numerischen Simulationsverfahrens basierend auf den Anschlussrohr-Konstruktionsparametern;

   Bestimmen (S103), durch den Prozessor, eines Schermaßes innerhalb des Anschlussrohrs und an Austritten des Anschlussrohrs basierend auf dem vorhergesagten Druck und den vorhergesagten Druckgradienten; und,

   bis das Schermaß minimiert ist, Aktualisieren (S104), durch den Prozessor, der Anschlussrohr-Konstruktionsparameter und sequenzielles Wiederholen des Durchführens des numerischen Simulationsprozesses und des Bestimmens des Schermaßes,

   wobei das Schermaß auf dem Bestimmen einer Differenz zwischen mindestens zwei Punkten zwischen einem Graphen einer Luftgeschwindigkeit in einer Mitte des Anschlussrohrs und einem Graphen einer Luftgeschwindigkeit in der Nähe von Wänden des Anschlussrohrs basiert und

   wobei, durch Minimieren der Varianz, A, das Schermaß definiert ist als:

   $$\min : \Lambda = \int_0^{L_{port}} \left(\delta - \bar{\delta}\right)^2 ds$$

   , wobei δ eine Differenz zwischen der Luftgeschwindigkeit in der Mitte des Anschlussrohrs und der Luftgeschwindigkeit in der Nähe der Wände des Anschlussrohrs bezeichnet.

2. Verfahren nach Anspruch 1, wobei die Anschlussrohr-Konstruktionsparameter eine Gestalt des Anschlussrohrs (120, 210, 220) definieren.

3. Verfahren nach Anspruch 2, wobei die Anschlussrohr-Konstruktionsparameter eine oder mehrere von einer Länge, einer minimalen Querschnittsfläche, einer Aufweitungsrate, einer maximalen Querschnittsfläche oder einer Parametrierung des Anschlussrohrs (120, 210, 220) umfassen.

4. Verfahren nach Anspruch 1, wobei die aktualisierten Anschlussrohr-Konstruktionsparameter, die dem minimierten Schermaß entsprechen, eine optimale Gestalt der Aufweitungskonstruktion für das Anschlussrohr (120, 210, 220) bestimmen.

5. Verfahren nach Anspruch 1, wobei der Lautsprecher ferner ein Gehäuse (130) umfasst, auf dem das Anschlussrohr (120, 210, 220) montiert ist.

6. Verfahren nach Anspruch 5, wobei das Anschlussrohr (120, 210, 220) auf einer Oberfläche des Gehäuses (130) montiert ist.

7. Verfahren nach Anspruch 5, wobei der Lautsprecher (100) ferner mindestens einen Treiber (110) umfasst, der auf einer Oberfläche des Gehäuses (130) montiert und zur Klangwiedergabe konfiguriert ist.

8. Verfahren nach Anspruch 7, wobei der mindestens eine Treiber (110) und das Anschlussrohr (120, 210, 220) auf derselben Oberfläche des Gehäuses (130) nebeneinander angeordnet sind.

9. Verfahren nach Anspruch 8, wobei der mindestens eine Treiber (110) und das Anschlussrohr (120, 210, 220) in einer vertikalen Richtung nebeneinander angeordnet sind.

10. Verfahren nach Anspruch 9, wobei das Anschlussrohr (120, 210, 220) unter dem mindestens einen Treiber (110) bereitgestellt ist.

11. Verfahren nach Anspruch 7, wobei in dem Gehäuse (130) resonierende Luft durch den mindestens einen Treiber (110) durch das Anschlussrohr (120, 210, 220) nach außen abgeführt wird.

## Revendications

1. Procédé de conception d'un tube à orifice (120, 210, 220) pour un haut-parleur (100) comprenant le tube à orifice présentant au moins une sortie évasée conçue par le procédé de conception en ce qui concerne les paramètres de conception de tube à orifice, p, le procédé comprenant :

   la réception (S101), par un processeur (2001), de paramètres de conception de tube à orifice ;
   la prédiction (S102), par le processeur, de pression et de gradients de pression en réalisant un processus de simulation numérique sur la base des paramètres de conception de tube à orifice ;
   la détermination (S103), par le processeur, d'une mesure de cisaillement au sein du tube à orifice et au niveau de sorties du tube à orifice sur la base de la pression et des gradients de pression prédits ; et
   jusqu'à ce que la mesure de cisaillement soit minimisée, la mise à jour (S104), par le processeur, des paramètres de conception du tube à orifice, et la répétition séquentielle de la réalisation du processus de simulation numérique et de la détermination de la mesure de cisaillement,
   dans lequel la mesure du cisaillement est sur la base d'une détermination d'une différence entre au moins deux points entre un graphique de la vitesse de l'air au niveau d'un centre du tube à orifice et un graphique de la vitesse de l'air près de parois du tube à orifice, et
   dans lequel, en minimisant la variance, A, la mesure du cisaillement est définie comme : min :

$$\Lambda = \int_0^{L_{port}} \left(\delta - \bar{\delta}\right)^2 ds,$$

   où δ désigne une différence entre la vitesse de l'air au niveau du centre du tube à orifice et la vitesse de l'air près des parois du tube à orifice.

2. Procédé de la revendication 1, dans lequel les paramètres de conception de tube à orifice définissent une forme du tube à orifice (120, 210, 220).

3. Procédé de la revendication 2, dans lequel les paramètres de conception de tube à orifice comprennent un ou plusieurs paramètres parmi une longueur, une surface de section transversale minimale, un taux d'évasement, une surface de section transversale maximale ou un paramétrage du tube à orifice (120, 210, 220).

4. Procédé de la revendication 1, dans lequel les paramètres de conception de tube à orifice mis à jour correspondant à la mesure minimisée du cisaillement déterminent une forme de conception d'évasement optimale pour le tube à orifice (120, 210, 220).

5. Procédé de la revendication 1, dans lequel le haut-parleur comprend en outre une enceinte (130) sur laquelle le tube à orifice (120, 210, 220) est monté.

6. Procédé de la revendication 5, dans lequel le tube à orifice (120, 210, 220) est monté sur une surface de l'enceinte (130).

7. Procédé de la revendication 5, dans lequel le haut-parleur (100) comprend en outre au moins un pilote (110) monté sur une surface de l'enceinte (130) et configuré pour reproduire du son.

8. Procédé de la revendication 7, dans lequel l'au moins un pilote (110) et le tube à orifice (120, 210, 220) sont agencés côte à côte sur la même surface de l'enceinte (130).

9. Procédé de la revendication 8, dans lequel l'au moins un pilote (110) et le tube à orifice (120, 210, 220) sont agencés côte à côte dans une direction verticale.

10. Procédé de la revendication 9, dans lequel le tube à orifice (120, 210, 220) est ménagé sous l'au moins un pilote (110).

**11.** Procédé de la revendication 7, dans lequel de l'air résonnant dans l'enceinte (130) est évacué à l'extérieur par l'au moins un pilote (110) au travers du tube à orifice (120, 210, 220).

FIG. 1

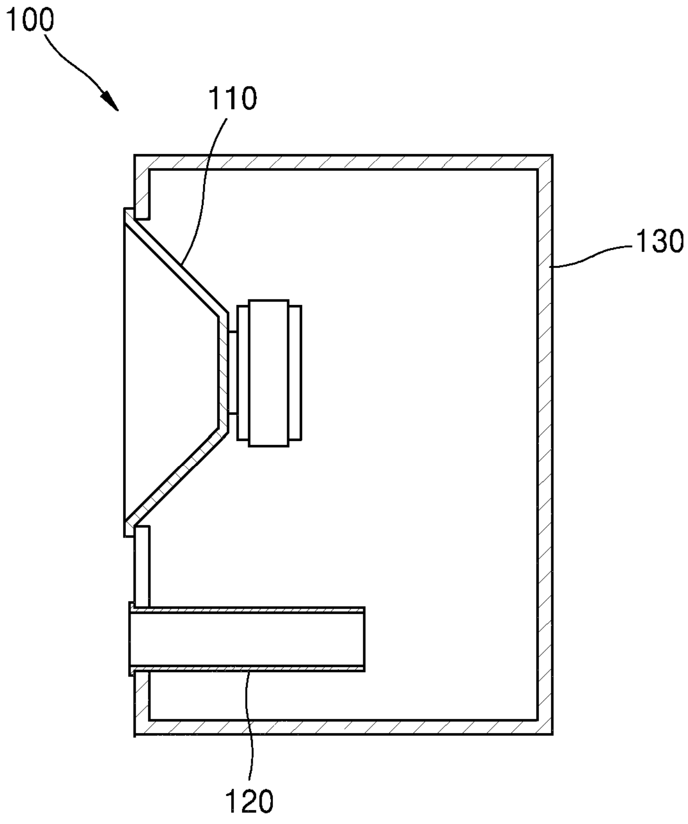

FIG. 2

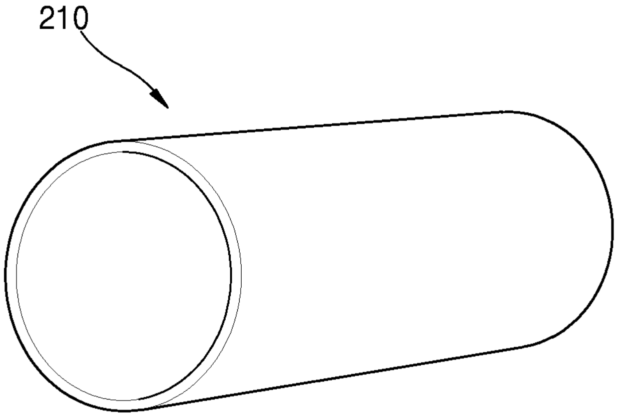


FIG. 3

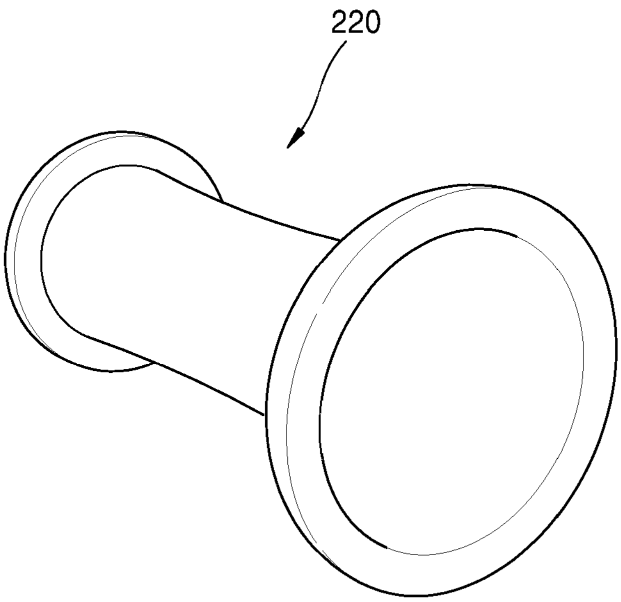

FIG. 4

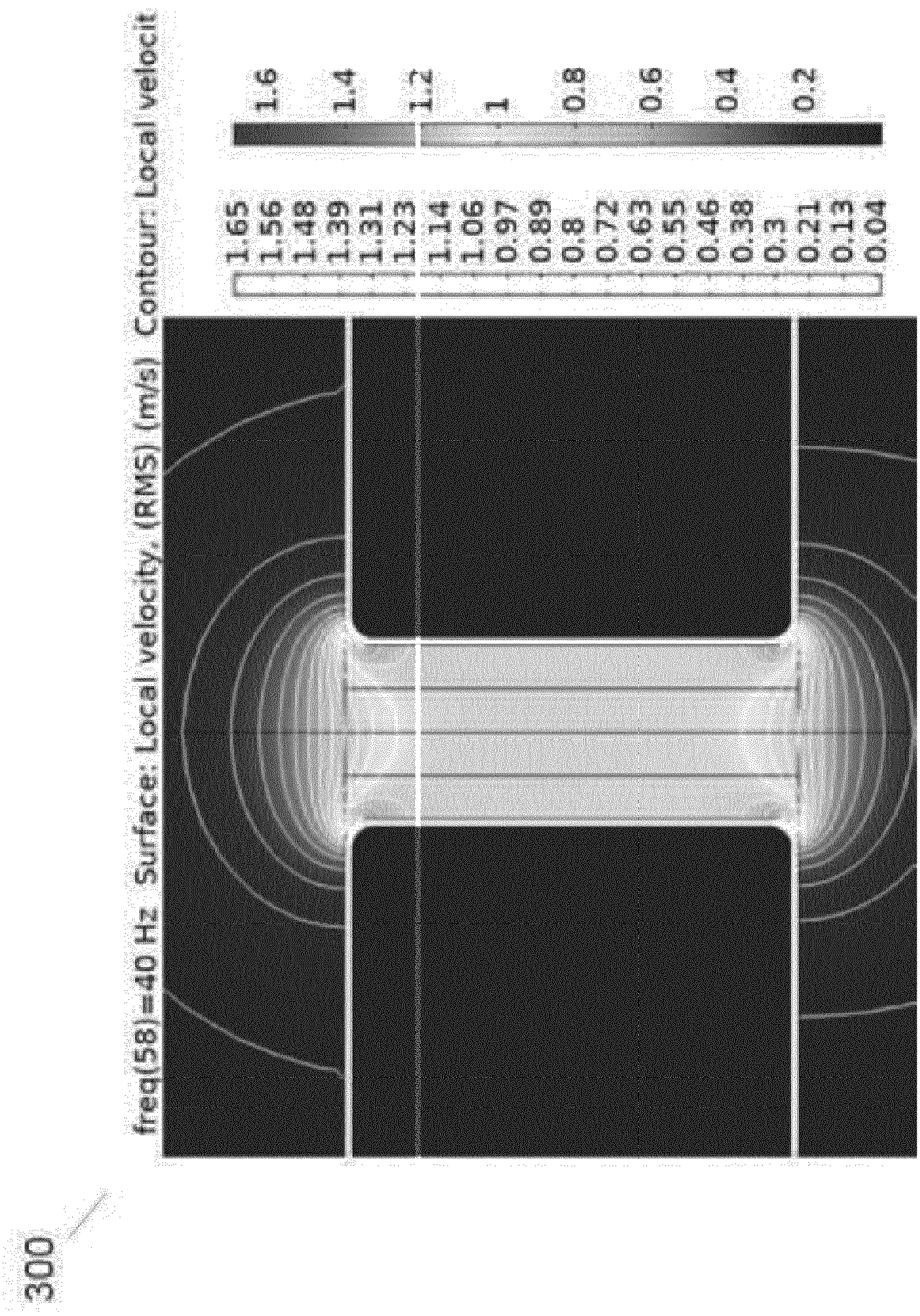
freq(58)=40 Hz Surface: Local velocity, (RMS) (m/s) Contour: Local velocit
1.65
1.56
1.48
1.39
1.31
1.23
1.14
1.06
0.97
0.89
0.8
0.72
0.63
0.55
0.46
0.38
0.3
0.21
0.13
0.04
1.6
1.4
1.2
1
0.8
0.6
0.4
0.2
300

FIG. 5

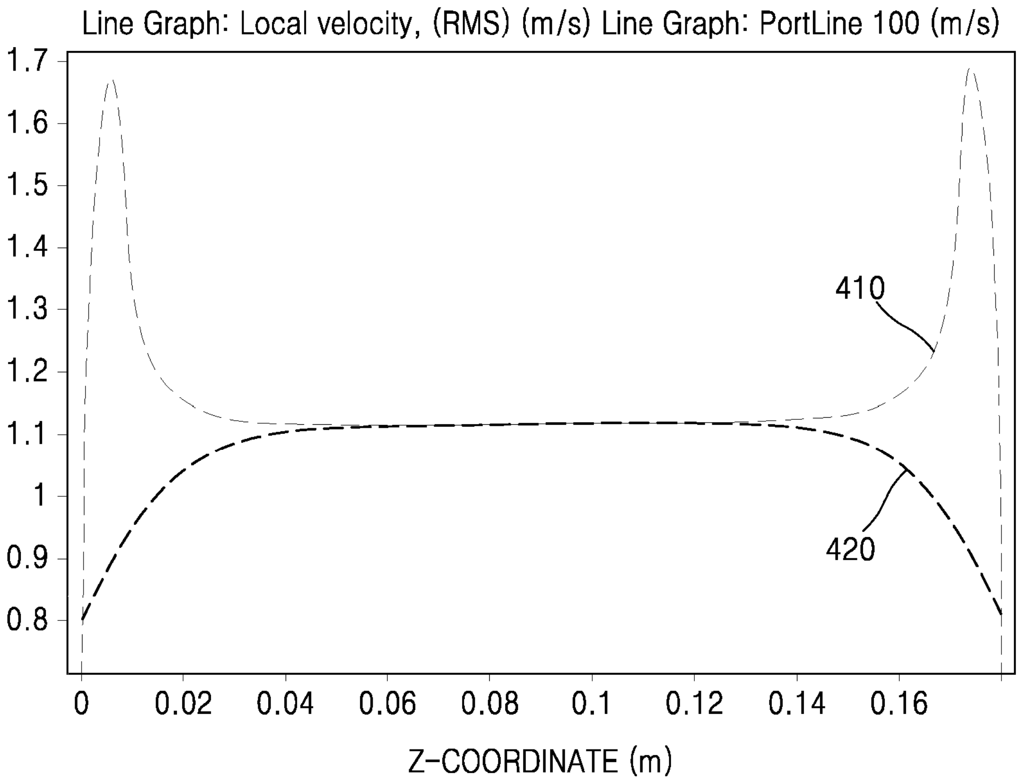
Line Graph: Local velocity, (RMS) (m/s) Line Graph: PortLine 100 (m/s)
1.7
1.6
1.5
1.4
1.3
1.2
1.1
1
0.9
0.8
410
420
0
0.02
0.04
0.06
0.08
0.1
0.12
0.14
0.16
Z-COORDINATE (m)

FIG. 6

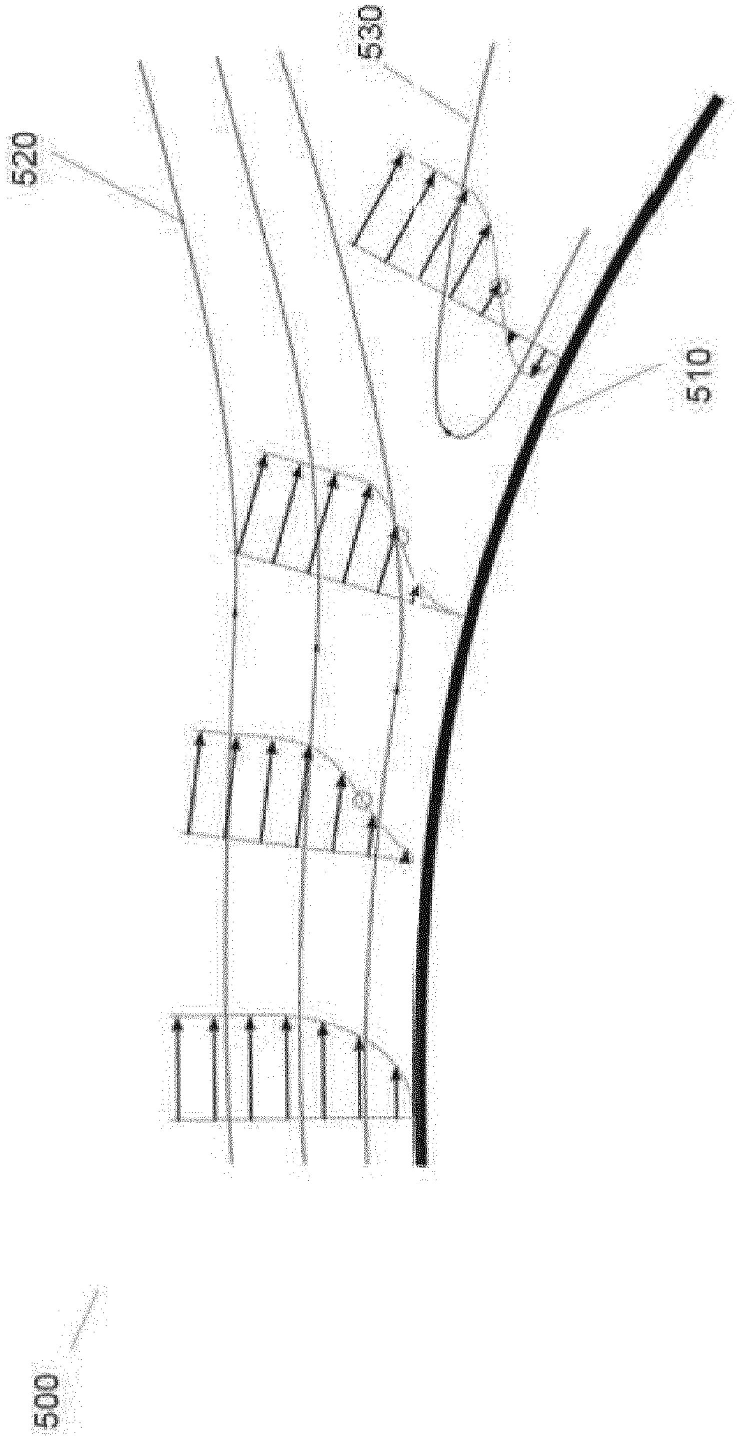

FIG. 7

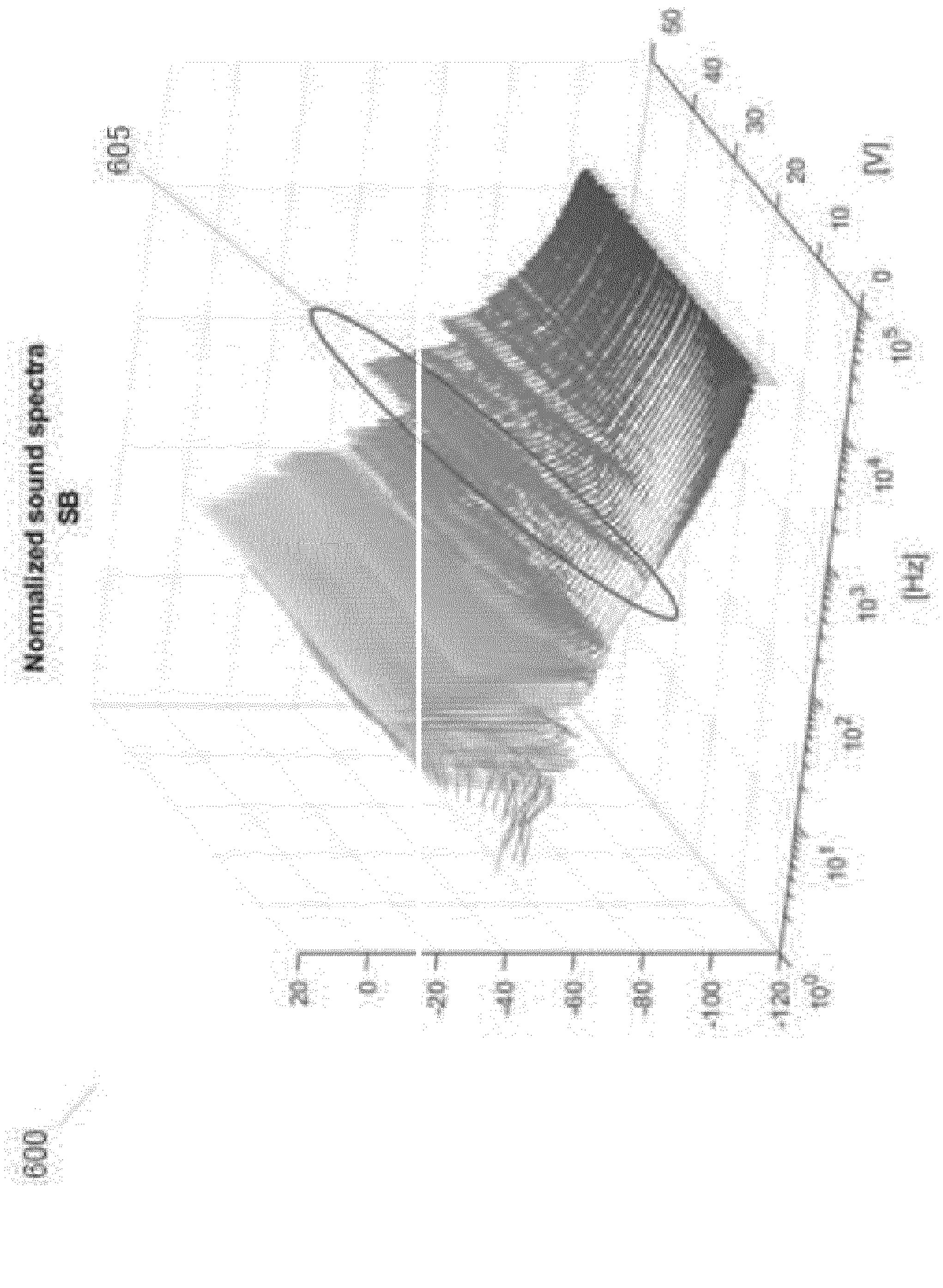
Normalized sound spectra
SB
605
600
20
0
-20
-40
-60
-80
-100
-120
$10^0$
$10^1$
$10^2$
$10^3$
$10^4$
$10^5$
[Hz]
0
10
20
30
40
50
[V]

FIG. 8

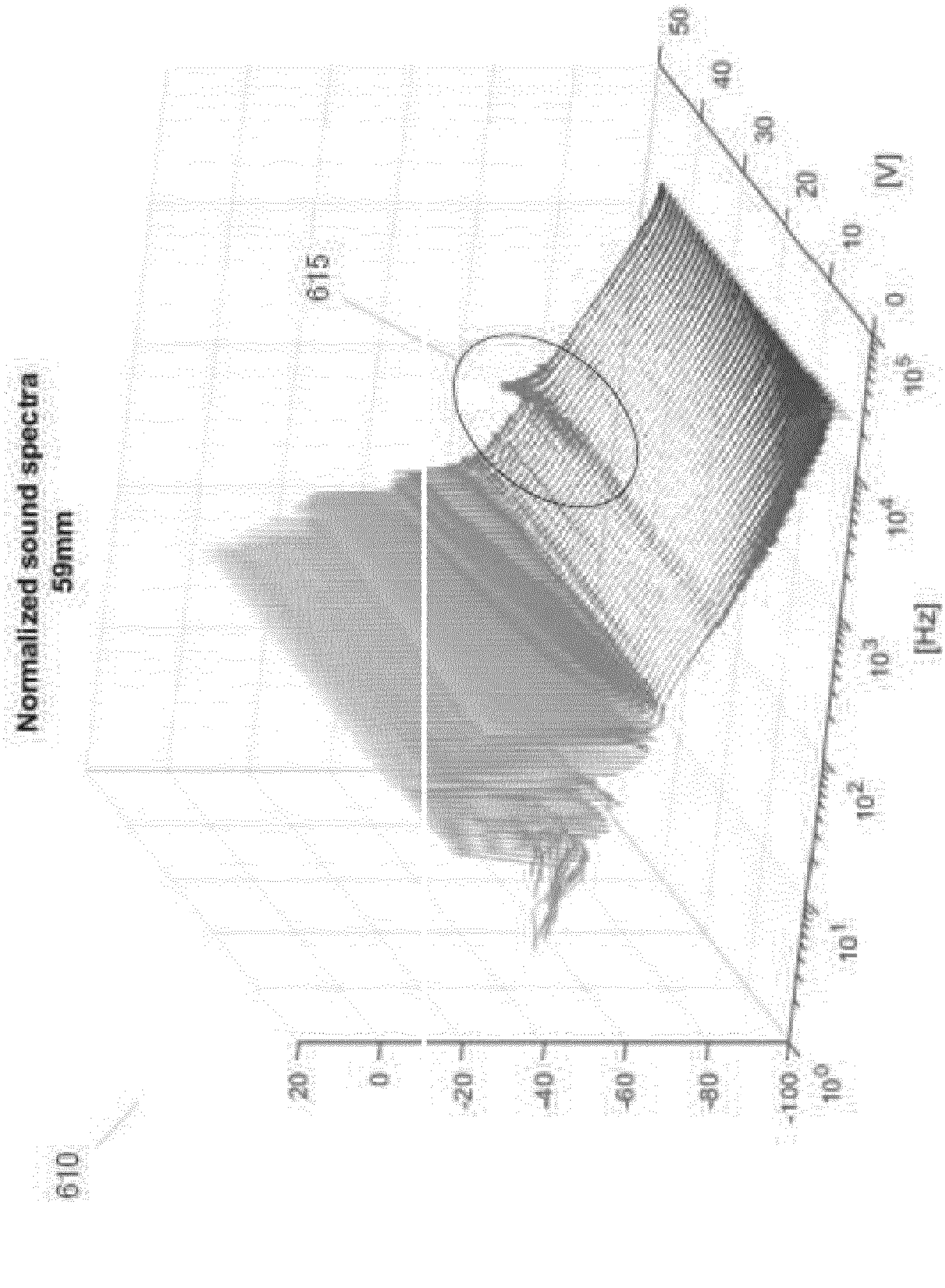
Normalized sound spectra
59mm
615
610
20
0
-20
-40
-60
-80
-100
$10^0$
$10^1$
$10^2$
$10^3$
$10^4$
$10^5$
[Hz]
0
10
20
30
40
50
[V]

FIG. 9

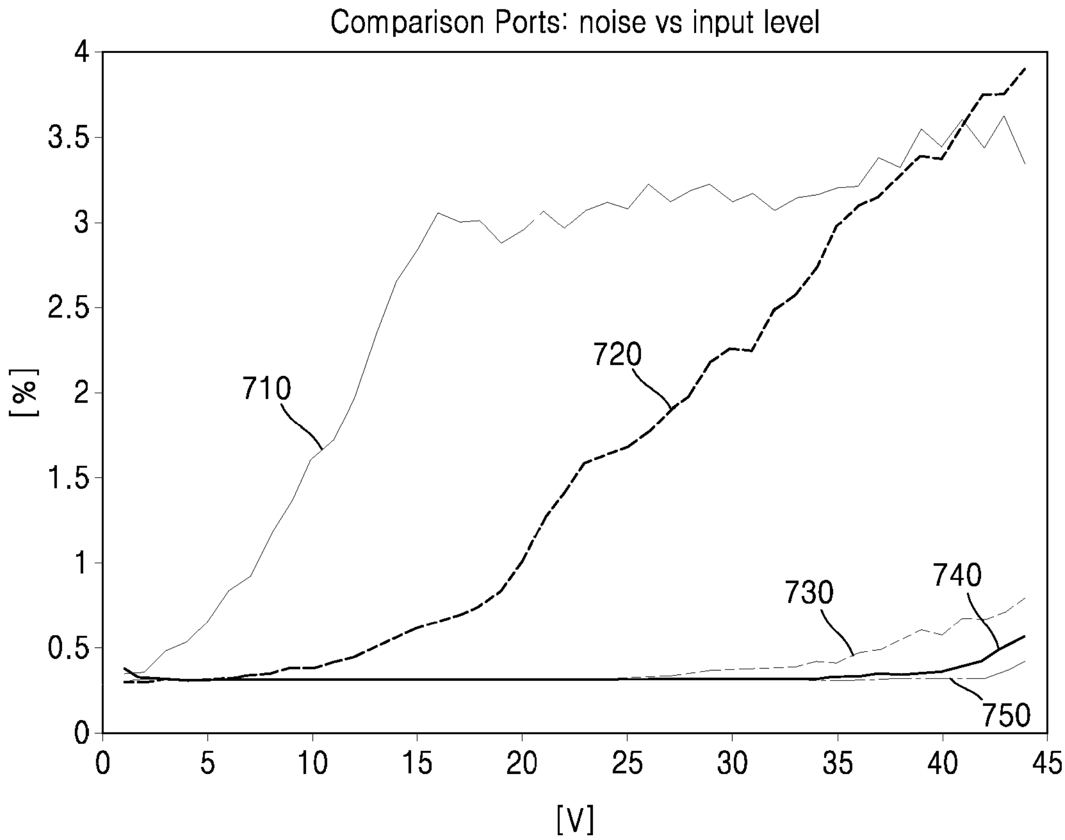
Comparison Ports: noise vs input level
4
3.5
3
2.5
2
1.5
1
0.5
0
[%]
0
5
10
15
20
25
30
35
40
45
[V]
710
720
730
740
750

FIG. 10

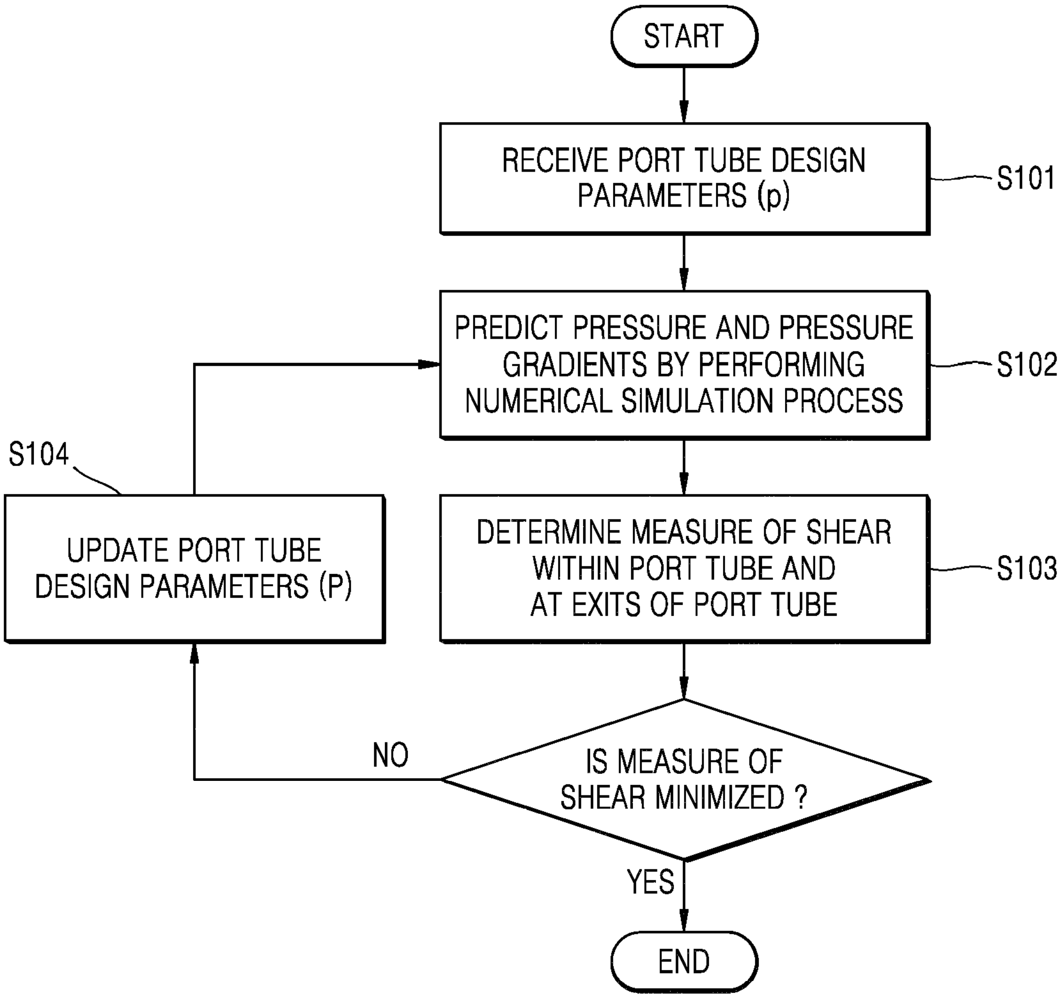
START
RECEIVE PORT TUBE DESIGN PARAMETERS (p)
S101
PREDICT PRESSURE AND PRESSURE GRADIENTS BY PERFORMING NUMERICAL SIMULATION PROCESS
S102
DETERMINE MEASURE OF SHEAR WITHIN PORT TUBE AND AT EXITS OF PORT TUBE
S103
IS MEASURE OF SHEAR MINIMIZED ?
NO
YES
UPDATE PORT TUBE DESIGN PARAMETERS (P)
S104
END

FIG. 11

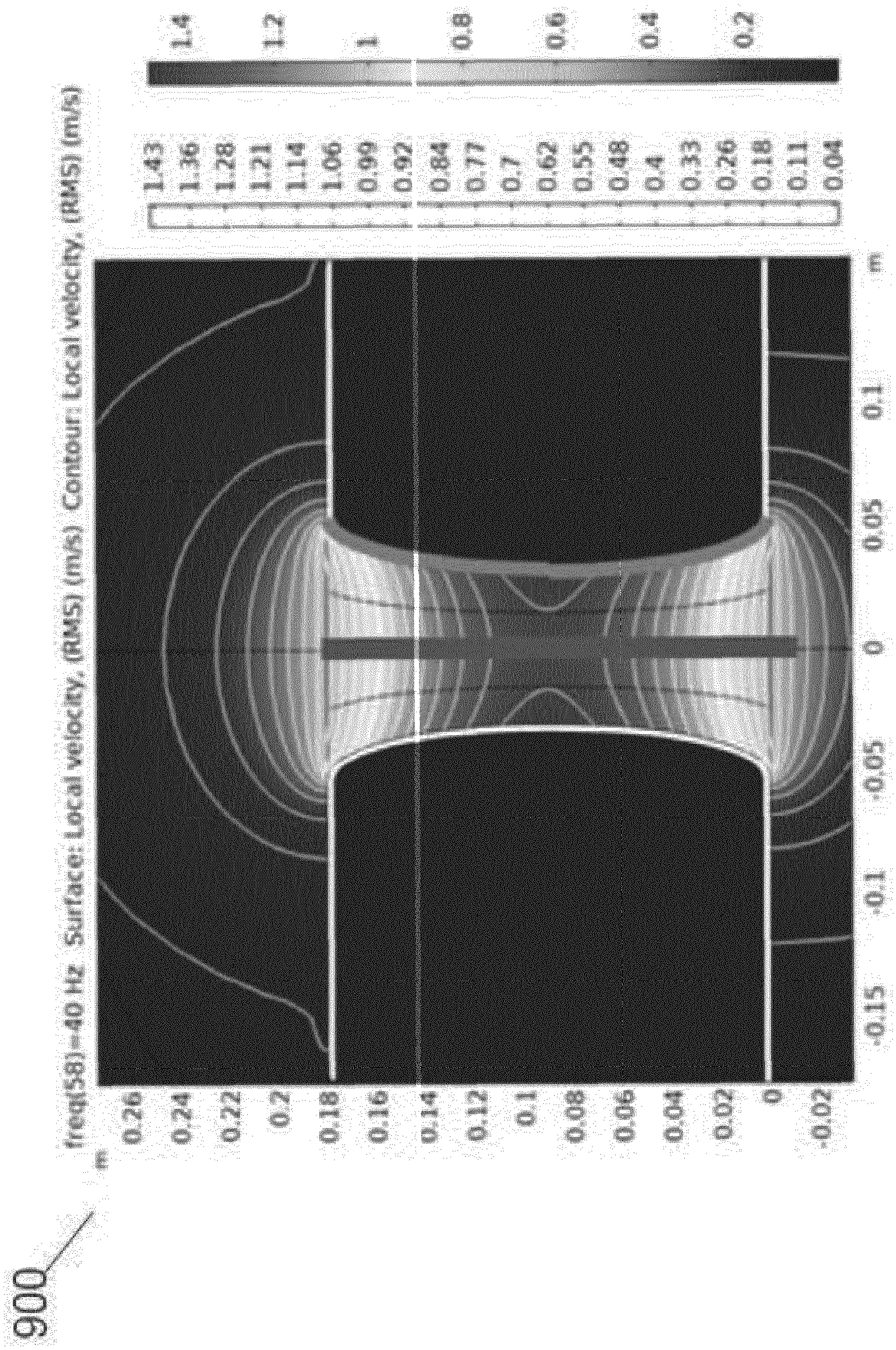
900
freq(58)=40 Hz Surface: Local velocity, (RMS) (m/s) Contour: Local velocity, (RMS) (m/s)

FIG. 12

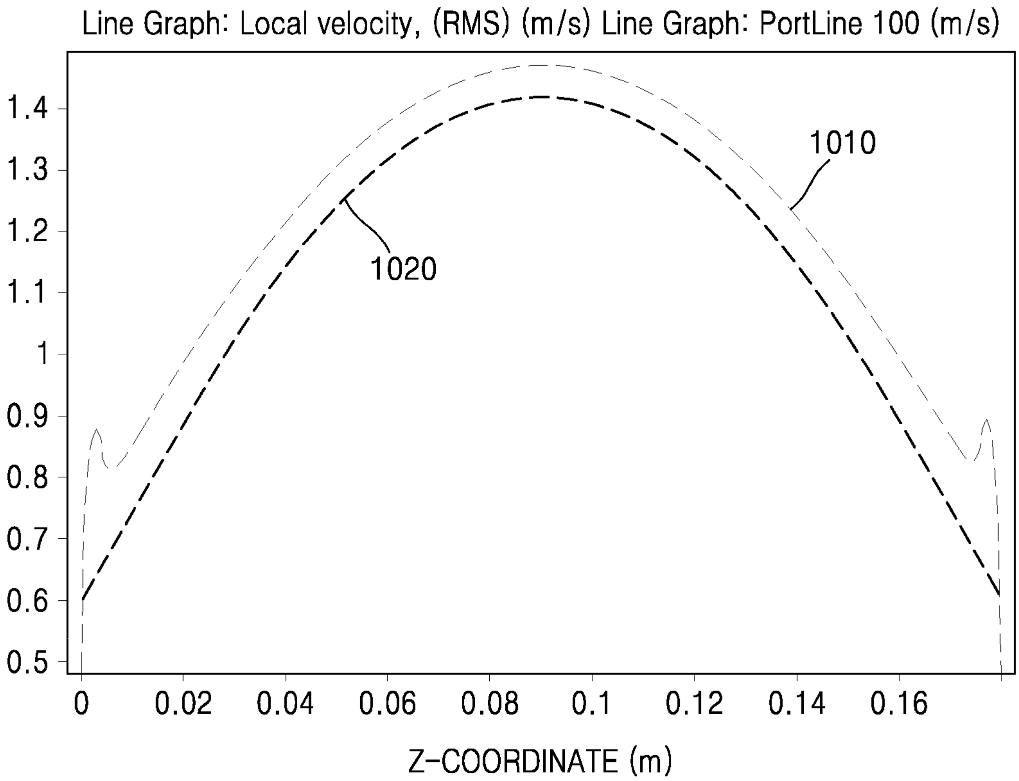
Line Graph: Local velocity, (RMS) (m/s) Line Graph: PortLine 100 (m/s)
1.4
1.3
1.2
1.1
1
0.9
0.8
0.7
0.6
0.5
0
0.02
0.04
0.06
0.08
0.1
0.12
0.14
0.16
1010
1020
Z-COORDINATE (m)

FIG. 13

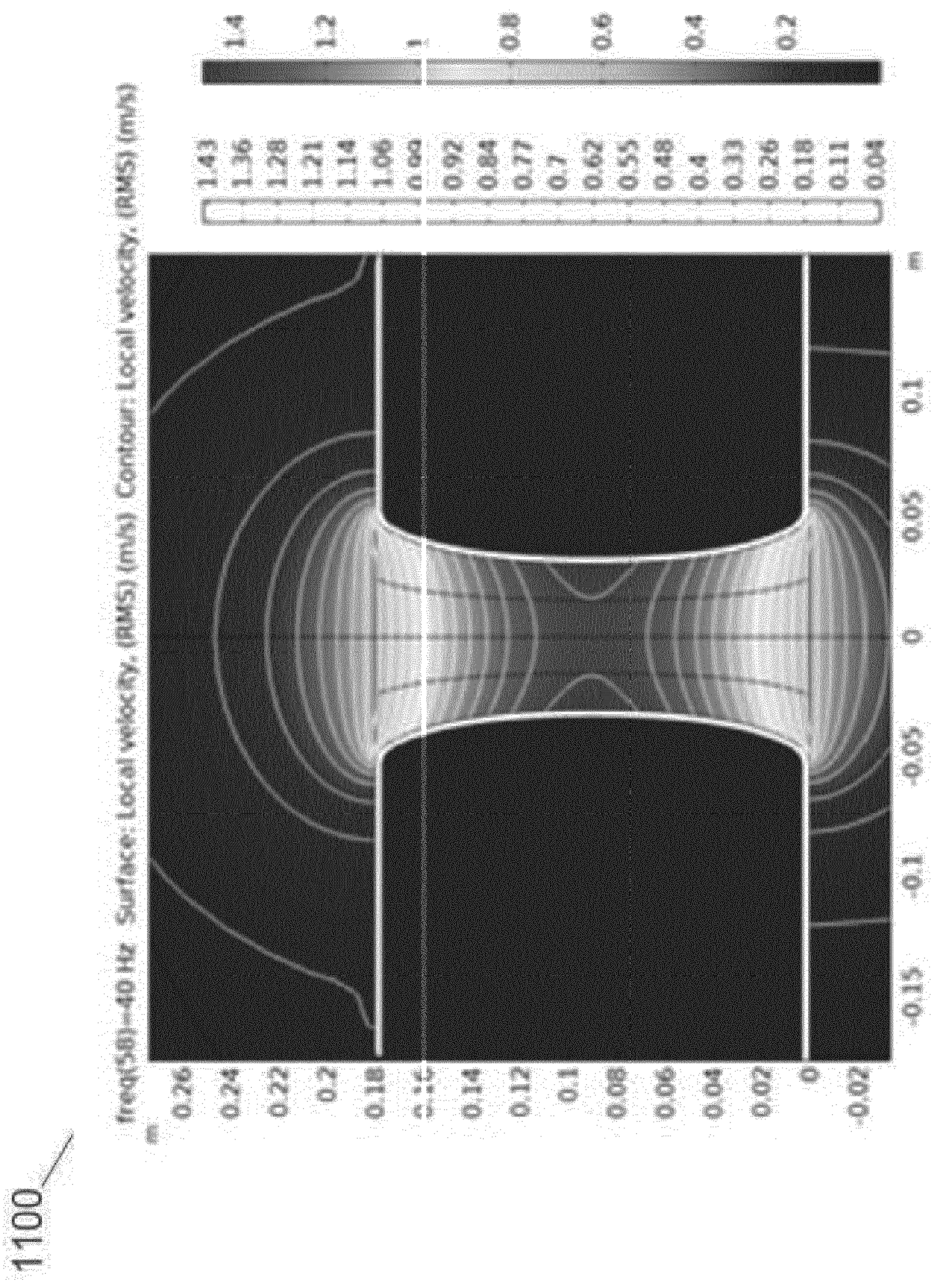
1100
freq(58)=40 Hz Surface: Local velocity, (RMS) (m/s) Contour: Local velocity, (RMS) (m/s)

# FIG. 14

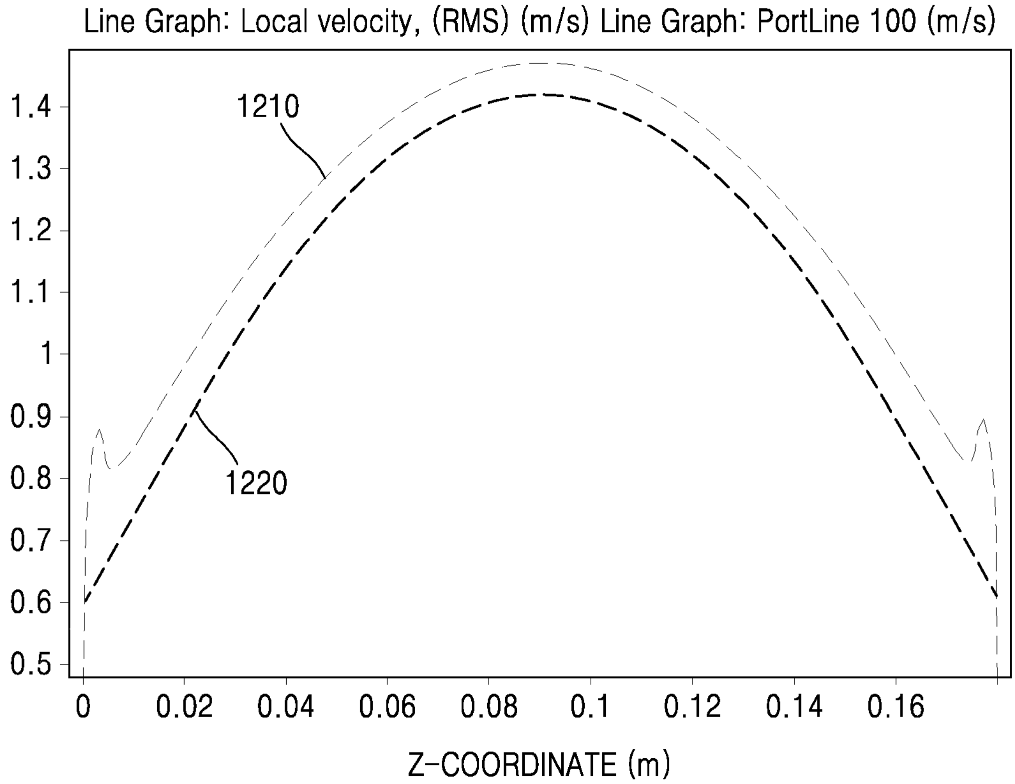
Line Graph: Local velocity, (RMS) (m/s) Line Graph: PortLine 100 (m/s)
1.4
1.3
1.2
1.1
1
0.9
0.8
0.7
0.6
0.5
0
0.02
0.04
0.06
0.08
0.1
0.12
0.14
0.16
Z-COORDINATE (m)
1210
1220

FIG. 15

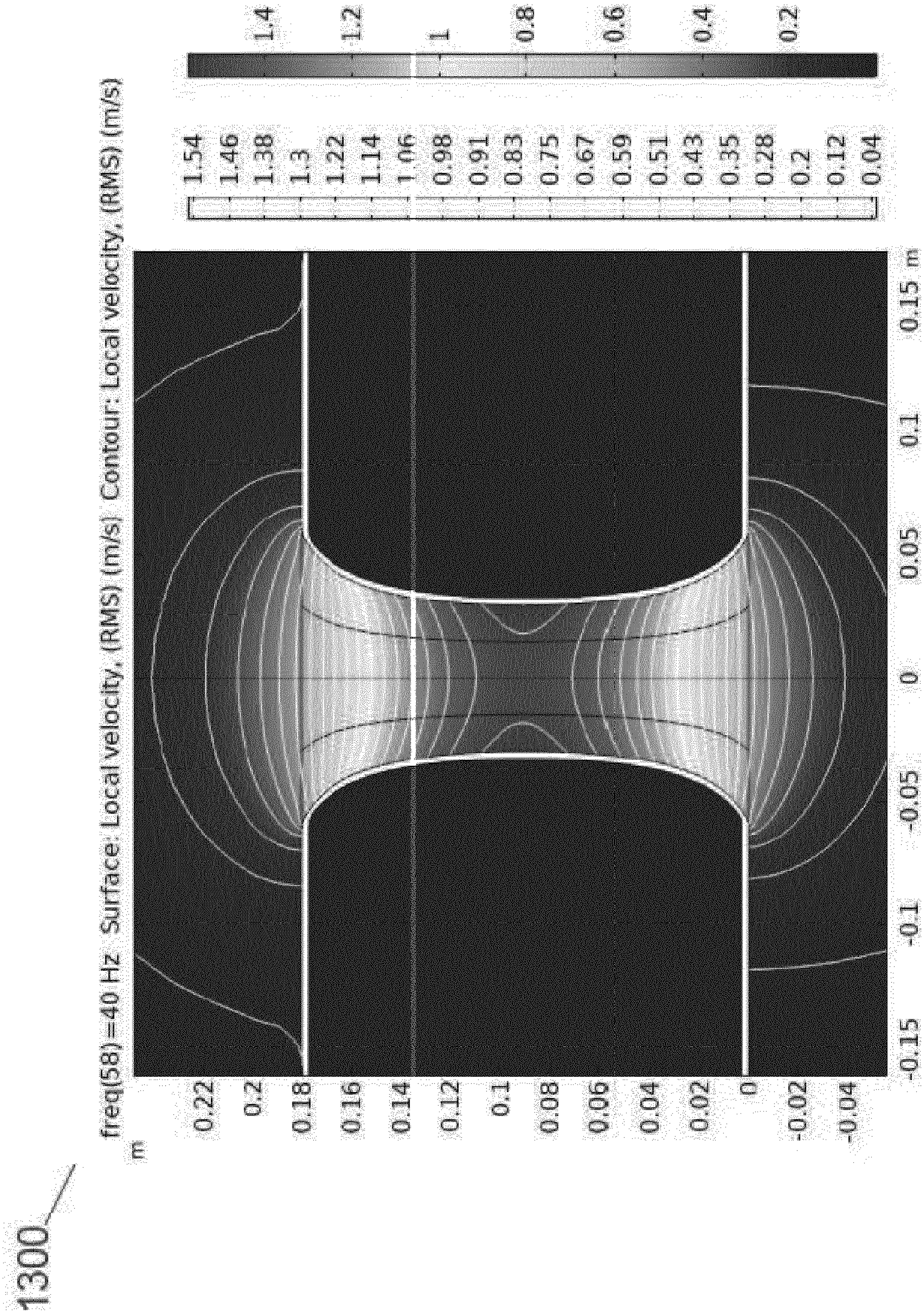
1300
freq(58)=40 Hz Surface: Local velocity, (RMS) (m/s) Contour: Local velocity, (RMS) (m/s)
m
0.22
0.2
0.18
0.16
0.14
0.12
0.1
0.08
0.06
0.04
0.02
0
-0.02
-0.04
-0.15
-0.1
-0.05
0
0.05
0.1
0.15 m
1.54
1.46
1.38
1.3
1.22
1.14
1.06
0.98
0.91
0.83
0.75
0.67
0.59
0.51
0.43
0.35
0.28
0.2
0.12
0.04
1.4
1.2
1
0.8
0.6
0.4
0.2

FIG. 16

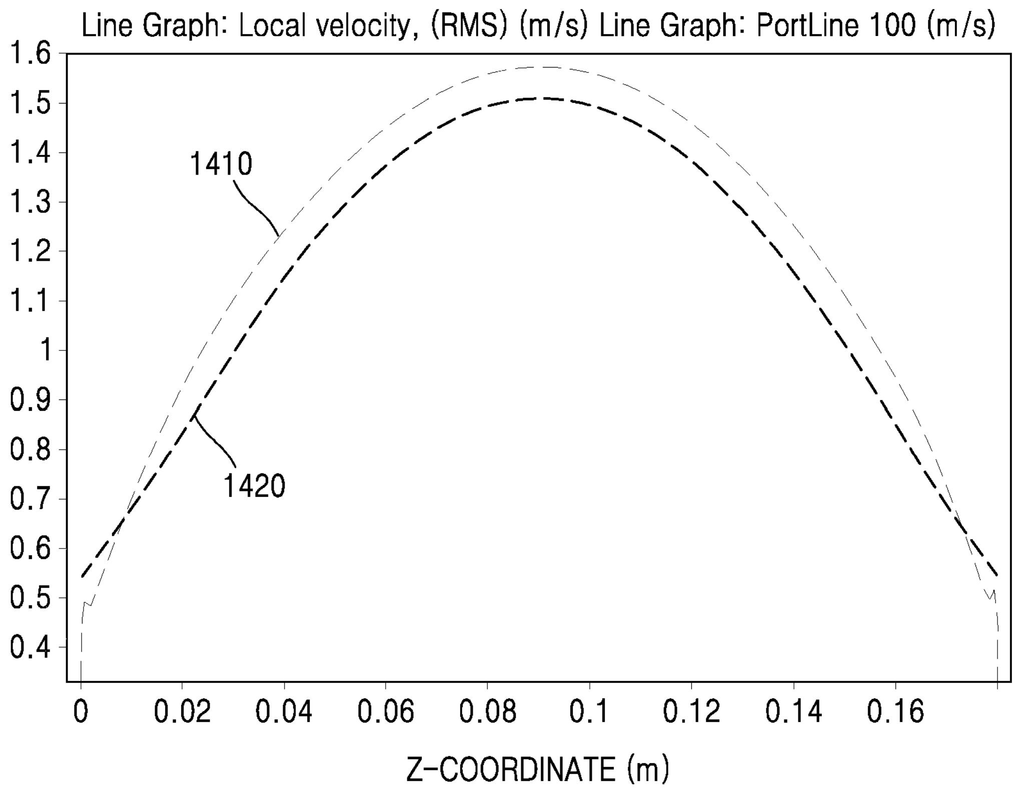
Line Graph: Local velocity, (RMS) (m/s) Line Graph: PortLine 100 (m/s)
1.6
1.5
1.4
1.3
1.2
1.1
1
0.9
0.8
0.7
0.6
0.5
0.4
1410
1420
0
0.02
0.04
0.06
0.08
0.1
0.12
0.14
0.16
Z-COORDINATE (m)

FIG. 17

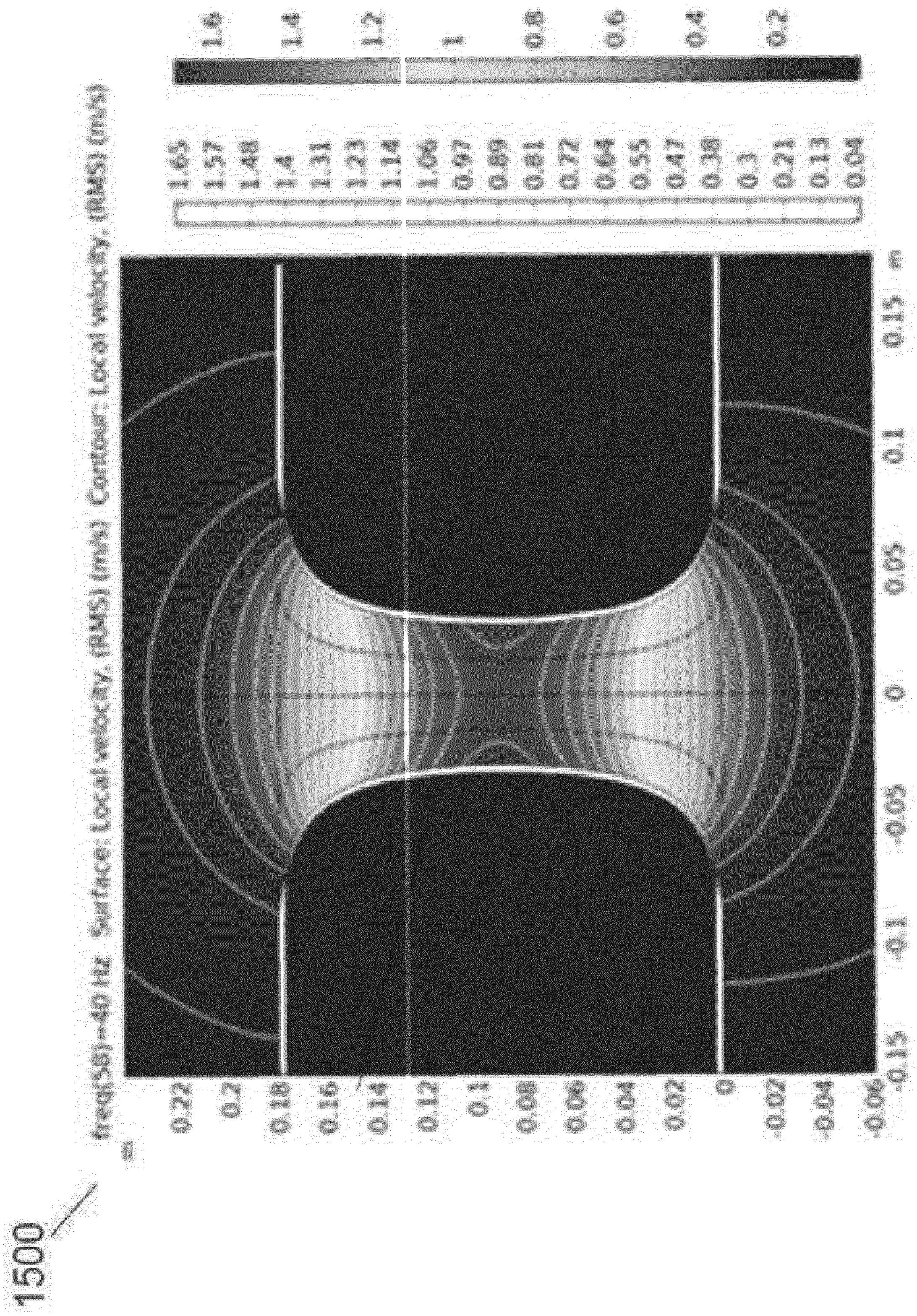
1500
freq(58)=40 Hz Surface: Local velocity, (RMS) (m/s) Contour: Local velocity, (RMS) (m/s)
1.65
1.57
1.48
1.4
1.31
1.23
1.14
1.06
0.97
0.89
0.81
0.72
0.64
0.55
0.47
0.38
0.3
0.21
0.13
0.04
1.6
1.4
1.2
1
0.8
0.6
0.4
0.2
m
0.22
0.2
0.18
0.16
0.14
0.12
0.1
0.08
0.06
0.04
0.02
0
-0.02
-0.04
-0.06
-0.15
-0.1
-0.05
0
0.05
0.1
0.15
m

FIG. 18

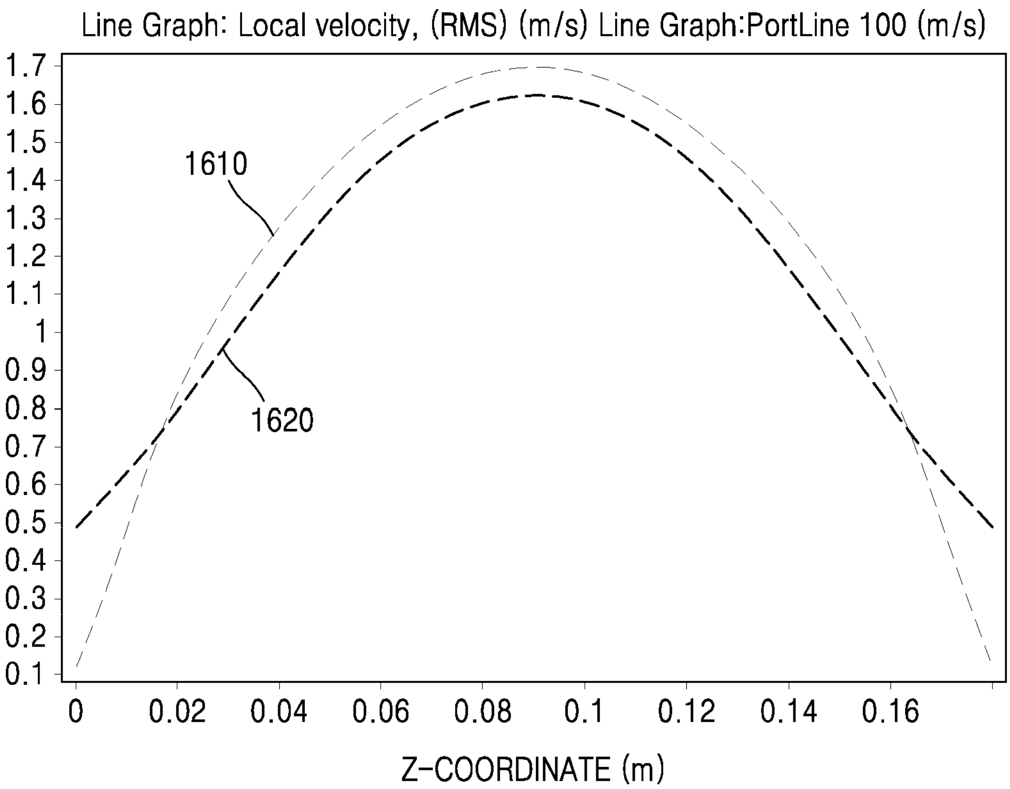
Line Graph: Local velocity, (RMS) (m/s) Line Graph:PortLine 100 (m/s)
1.7
1.6
1.5
1.4
1.3
1.2
1.1
1
0.9
0.8
0.7
0.6
0.5
0.4
0.3
0.2
0.1
1610
1620
0
0.02
0.04
0.06
0.08
0.1
0.12
0.14
0.16
Z-COORDINATE (m)

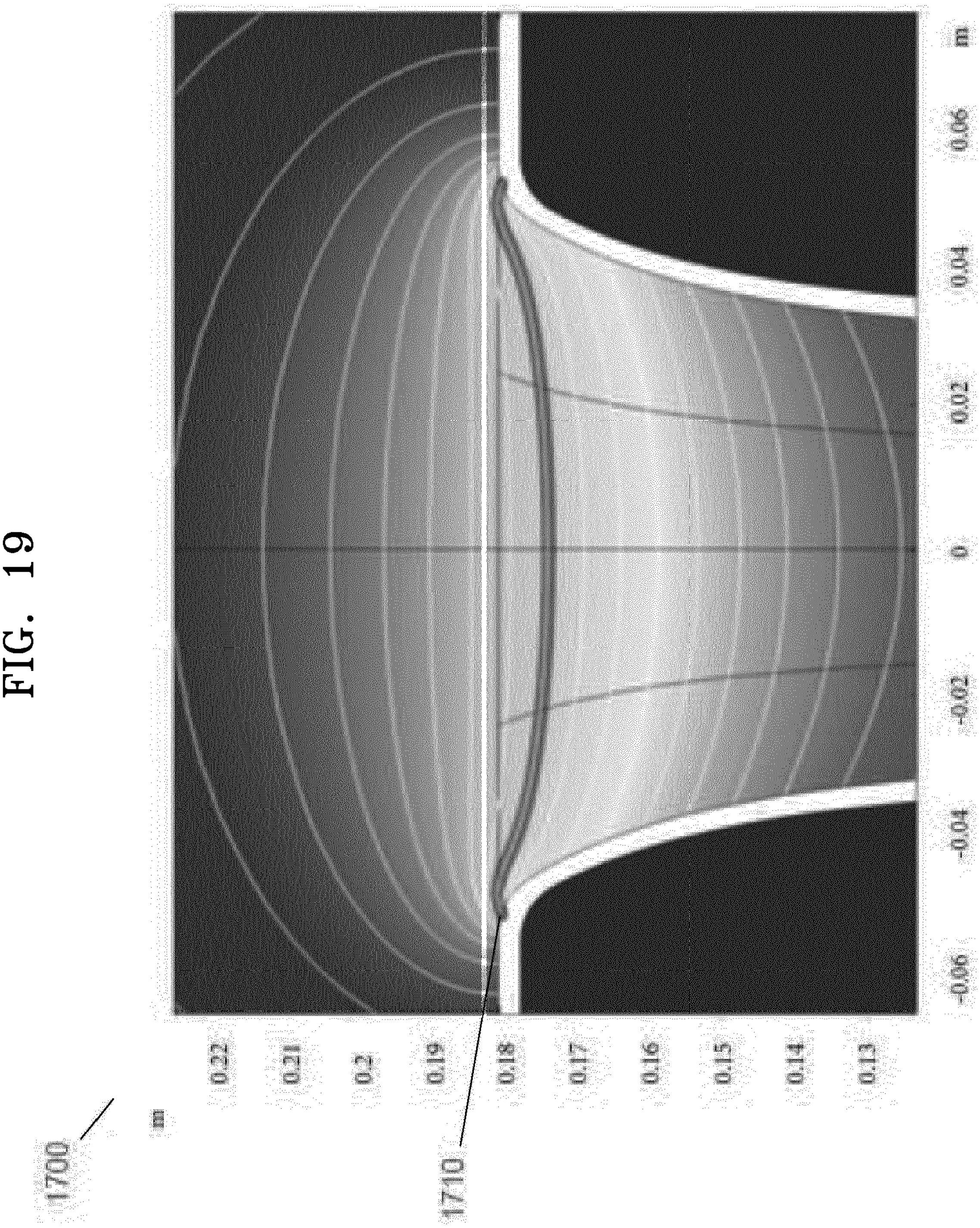
1700
1710
m
0.22
0.21
0.2
0.19
0.18
0.17
0.16
0.15
0.14
0.13
-0.06
-0.04
-0.02
0
0.02
0.04
0.06
m

FIG. 19

FIG. 20

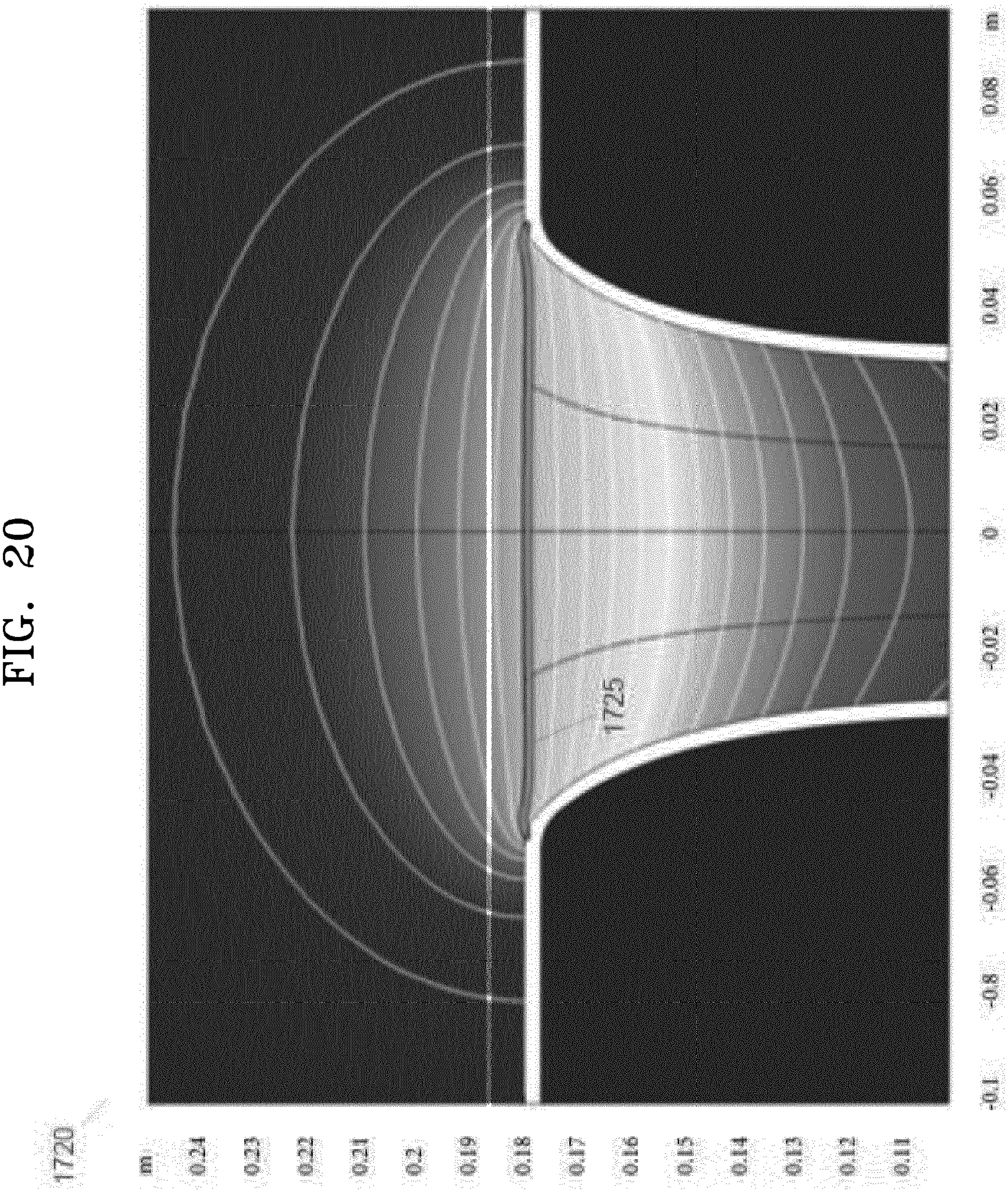
1720
1725
m
0.24
0.23
0.22
0.21
0.2
0.19
0.18
0.17
0.16
0.15
0.14
0.13
0.12
0.11
-0.1
-0.8
-0.06
-0.04
-0.02
0
0.02
0.04
0.06
0.08
m

FIG. 21

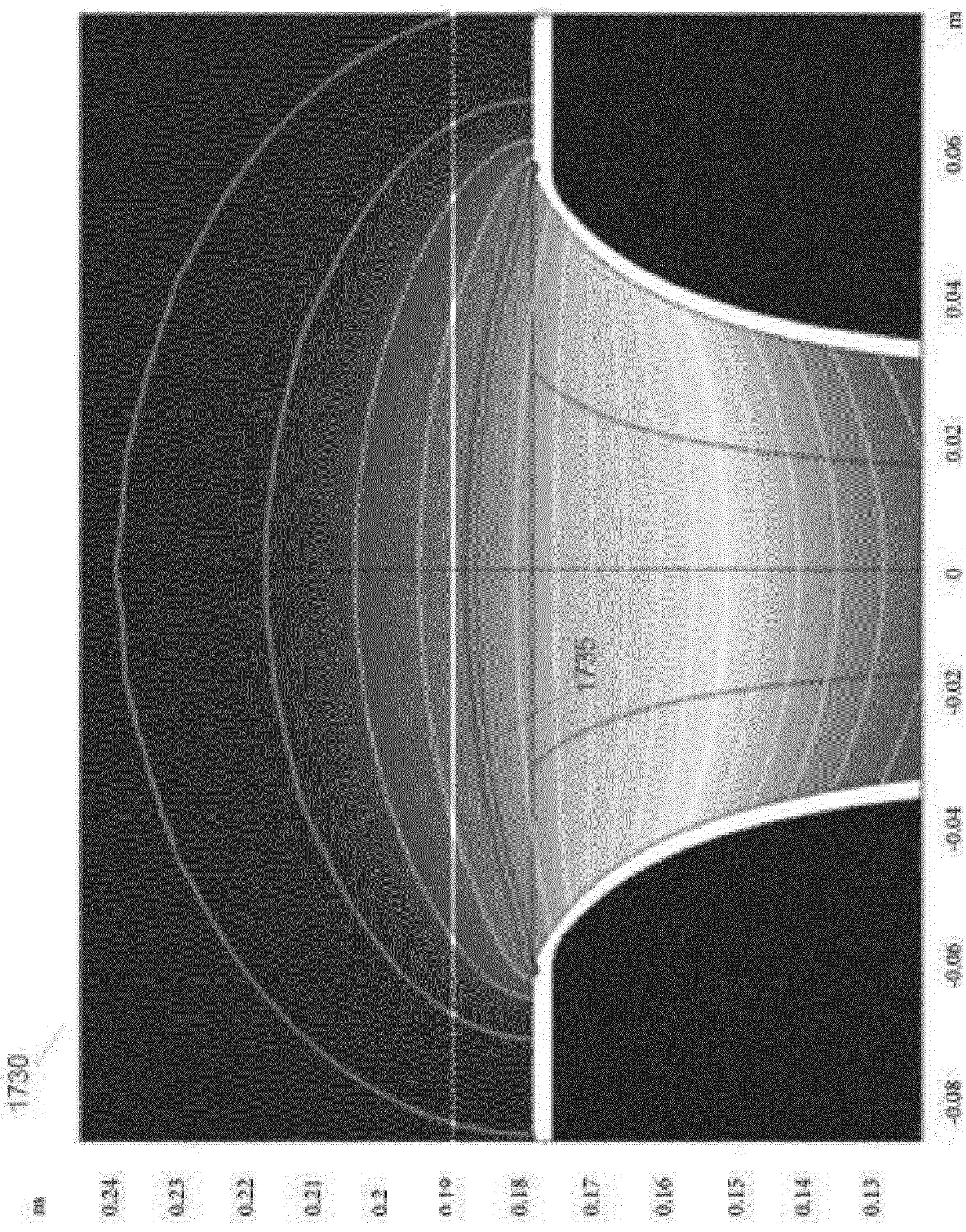
1730
1735
m
0.24
0.23
0.22
0.21
0.2
0.19
0.18
0.17
0.16
0.15
0.14
0.13
-0.08
-0.06
-0.04
-0.02
0
0.02
0.04
0.06
m

FIG. 22

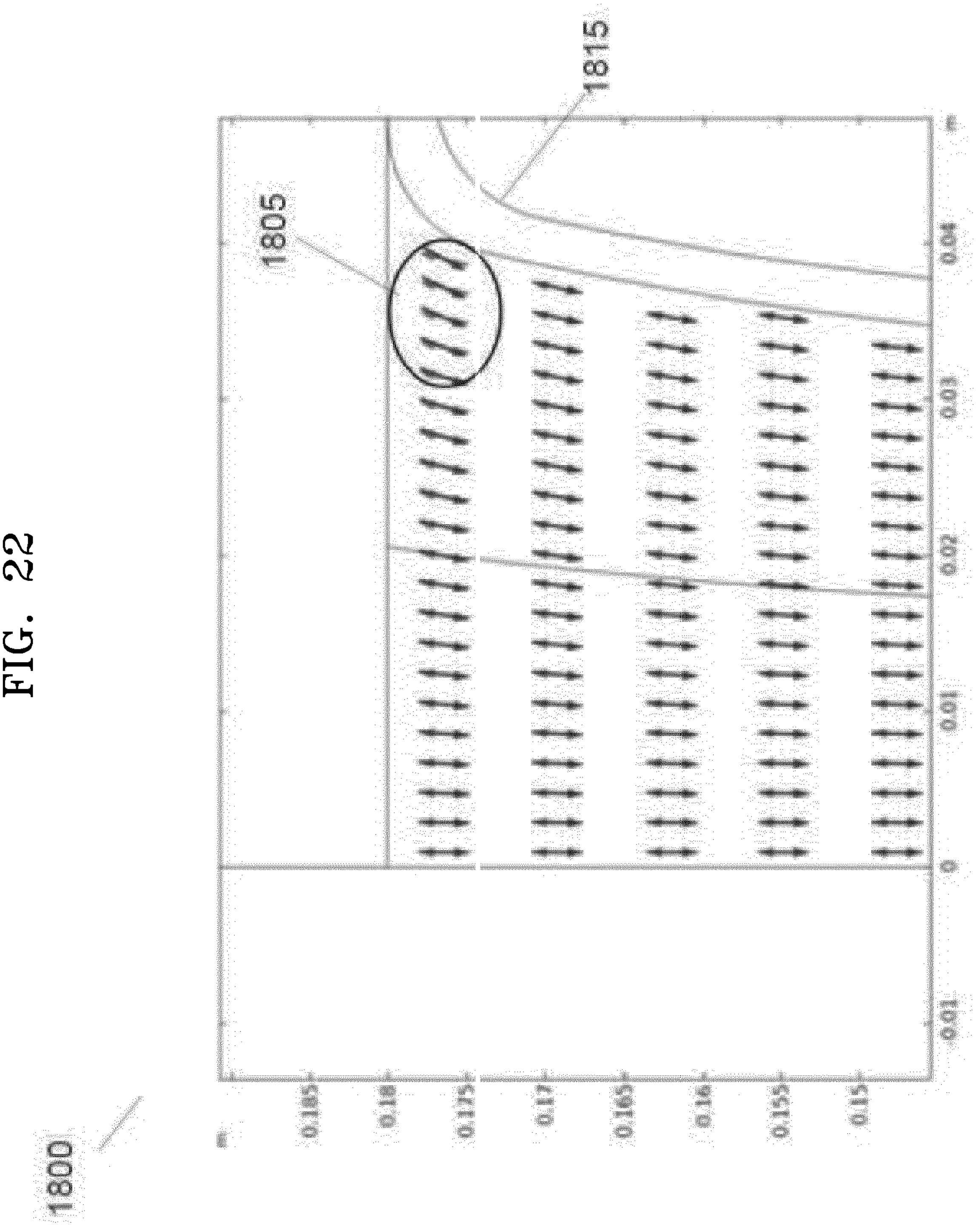
1800
1805
1815
m
0.185
0.18
0.175
0.17
0.165
0.16
0.155
0.15
-0.01
0
0.01
0.02
0.03
0.04
m

FIG. 23

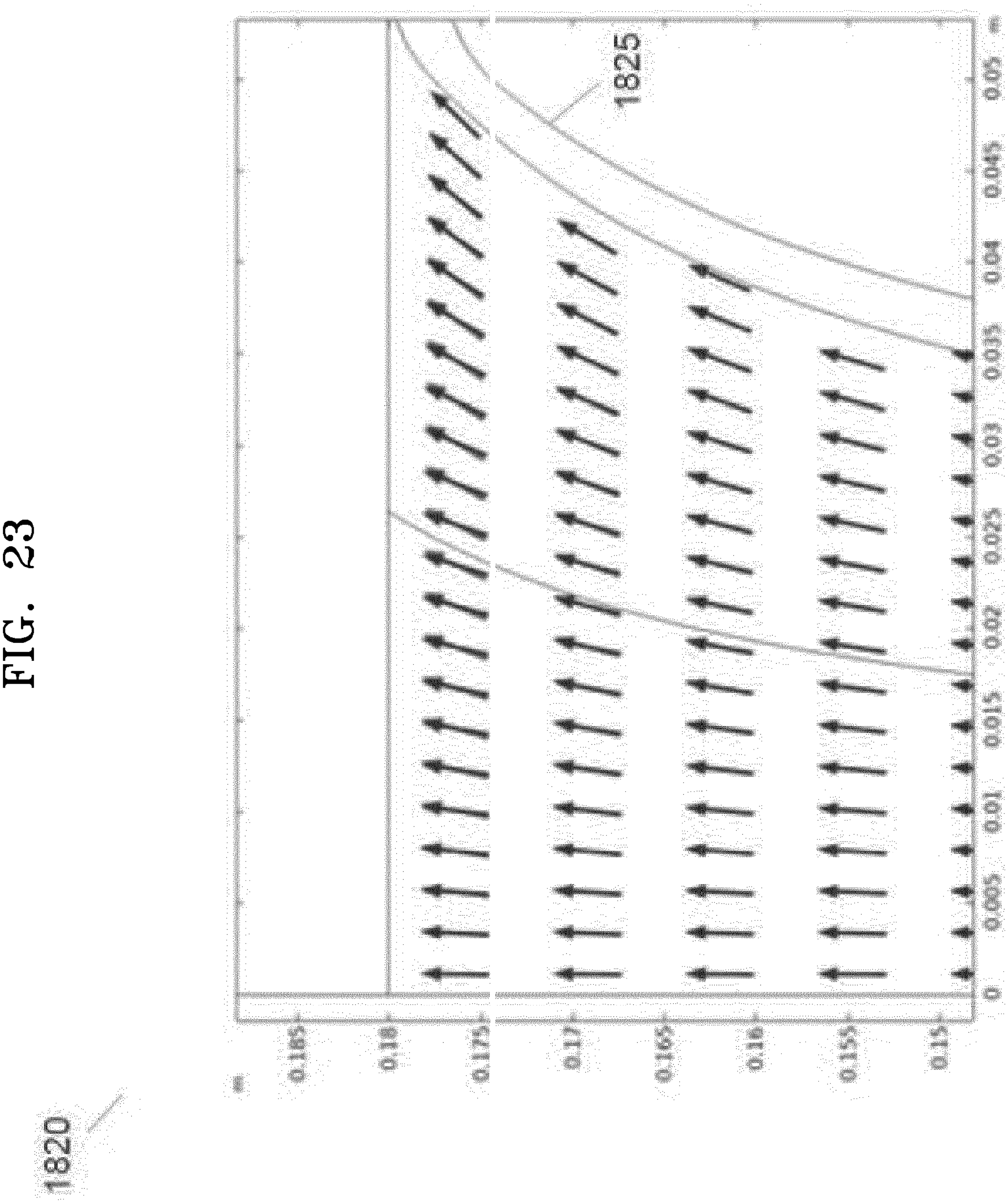
1820
1825
0.185
0.18
0.175
0.17
0.165
0.16
0.155
0.15
0
0.005
0.01
0.015
0.02
0.025
0.03
0.035
0.04
0.045
0.05

FIG. 24

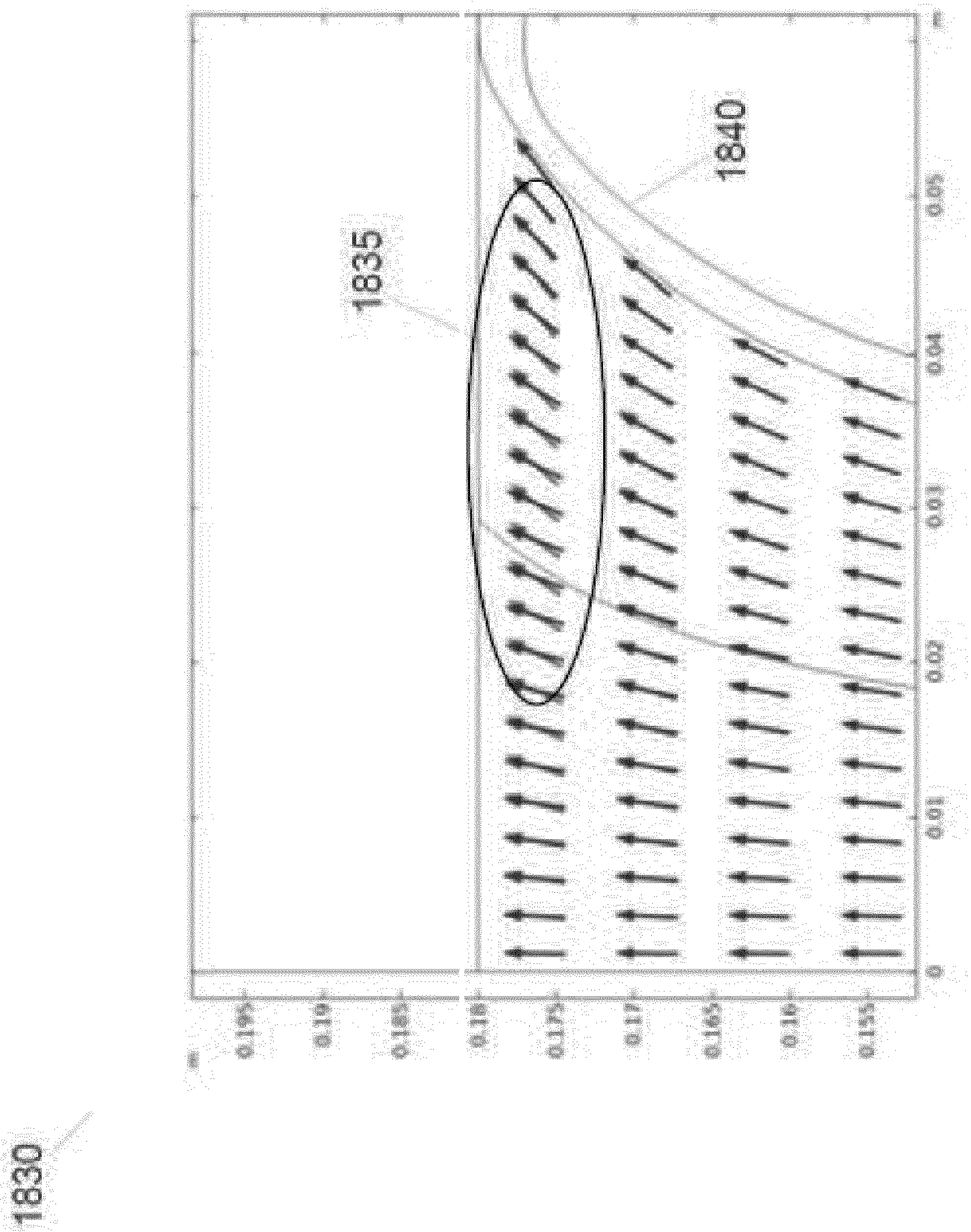
1830
1835
1840
0
0.01
0.02
0.03
0.04
0.05
0.195
0.19
0.185
0.18
0.175
0.17
0.165
0.16
0.155

FIG. 25

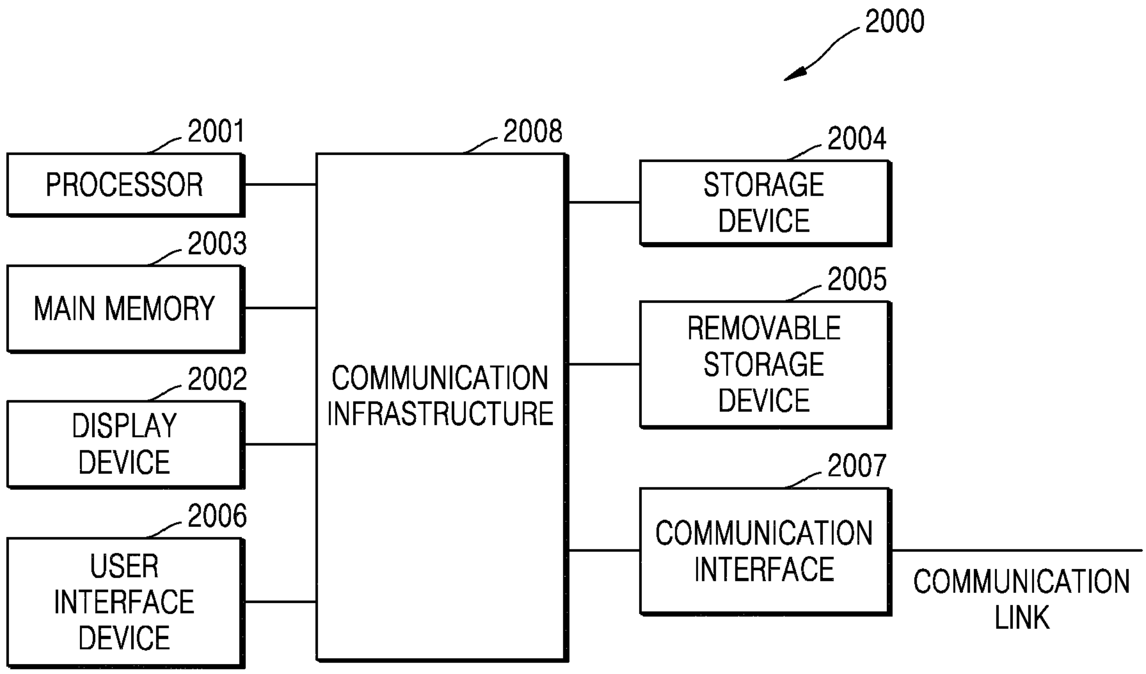
2000
2001
PROCESSOR
2003
MAIN MEMORY
2002
DISPLAY DEVICE
2006
USER INTERFACE DEVICE
2008
COMMUNICATION INFRASTRUCTURE
2004
STORAGE DEVICE
2005
REMOVABLE STORAGE DEVICE
2007
COMMUNICATION INTERFACE
COMMUNICATION LINK

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2006052992 A1


### Non-patent literature cited in the description


- **SALVATTI et al.** Maximizing Performance from Loudspeaker Ports. *Journal of the Audio Engineering Society*, 2002, vol. 50 (1,2)
- **ROSSI et al.** PIV Application to Fluid Dynamics of Bass Reflex Ports. *Particle Image Velocimetry*, 2008, vol. 112, 259-270
- **RAPOPORT** ; **DEVANTIER**. Analysis and Modeling of the BiDirectional Fluid Flow in Loudspeaker Ports. *Preprints of Papers Presented at the AES Convention*, 2004, 1-17